# EUROPEAN PATENT APPLICATION

(11) **EP 4 765 938 A1**
(43) Date of publication of application: **24.06.2026**
(21) Application number: 24853643.5
(22) Date of filing: 08.08.2024
(51) Int. Cl.: H04W 24/10

(54) **METHOD AND APPARATUS USED IN COMMUNICATION NODE FOR WIRELESS COMMUNICATION**

(30) Priority: 14.08.2023 CN 202311020476
(71) Applicant: Apogee 5G Global, LLC, Plano, TX 75024 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2024/110589
(87) International publication number: WO 2025/036232

(57) **Abstract**

Disclosed in the present application are a method and apparatus used in a communication node for wireless communication. The method comprises: a communication node receiving a first message, wherein the first message comprises configuration information of a first cell, and the first message is signaling of an RRC sublayer; when a first condition set is satisfied, determining the first cell; and after the first cell is determined by means of the action, applying the configuration information of the first cell, wherein the first condition set depends on at least a first measurement result and a second measurement result, the first measurement result comprises a latest measurement result measured by a physical layer, the second measurement result comprises an expected measurement result, the second measurement result is different from the first measurement result, and before the configuration information of the first cell is applied by means of the action, configuration information of a second cell is applied. The present application reduces the impact on a protocol and prevents configuration information of a first cell from being applied too early or too late.

## Description

### Technical Field

The present application relates to a transmission method and apparatus in a wireless communication system, and in particular to a method and an apparatus for mobility management.

### Background Art

With the continuous development of wireless communication, the requirements for mobility, transmission delay, and system capacity are becoming increasingly high. The 3GPP (the 3rd Generation Partnership Project) RAN (Radio Access Network) #94e meeting decided to study L1 (Layer 1)/L2 (Layer 2) triggered mobility (LTM) in the "Further NR (New Radio) mobility enhancements" work item (WI).

In NR R (release) 18, CSI (Channel State Information) compression based on AI (Artificial Intelligence) or ML (Machine Learning) has been established as a work item. Considering the advantages of AI or ML, applying AI or ML to mobility has become an important evolution direction for 3GPP in R19.

### Summary of the Invention

In traditional mobility solutions, UE determines whether to apply configuration information of one cell according to at least the former of a latest measurement result measured by a physical layer and a previous measurement result. For example, a measurement result in a triggering condition for handover depends on at least the former of the latest measurement result measured by the physical layer and the previous measurement result. Through research, the applicant finds that to consider an expected measurement result, existing solutions may cause that the configuration information of one cell is applied too early or too late, such as handover that is too early or handover that is too late, which is not conducive to the robustness of mobility.

In view of the above problems, the present application provides a solution. In the description of the above problems, an NR system is used as one example. The present application is also applicable to scenarios such as an LTE (Long-Term Evolution) system or an LTE-A (Long-Term Evolution Advanced) system to achieve technical effects similar to those of the NR system; and further, although the present application provides a specific implementation for mobility in an RRC_CONNECTED state, the present application can also be used in scenarios such as mobility in an RRC_IDLE state or an RRC_INACTIVE state to achieve technical effects similar to those of the RRC_CONNECTED state. Further, the use of a unified design solution for different scenarios also helps to reduce hardware complexity and cost. Further, although the present application provides a specific implementation for handover, the present application can also be used in beam management scenarios to achieve technical effects similar to those of the handover. Further, although the present application provides a specific implementation for AI/ML, the present application can also be used in non-AI/ML scenarios to achieve technical effects similar to those of the AI/ML. Further, although the original intention of the present application is for a Uu air interface, the present application can also be used for a PC5 interface to achieve technical effects similar to those of the Uu air interface. Further, although the original intention of the present application is for a terminal and base station scenario, the present application is also applicable to a V2X (Vehicle-to-Everything) scenario, and communication scenarios between the terminal and a relay and between the relay and a base station to achieve technical effects similar to those in the terminal and base station scenario. Further, although the original intention of the present application is for a terminal and base station scenario, the present application is also applicable to a communication scenario of an IAB (Integrated Access and Backhaul) to achieve technical effects similar to those in the terminal and base station scenario. Further, although the original intention of the present application is for a terrestrial network (TN) scenario, the present application is also applicable to a communication scenario of a non-terrestrial network (NTN) to achieve technical effects similar to those in the TN scenario. In addition, the use of a unified solution for different scenarios also helps to reduce hardware complexity and costs.

As one embodiment, interpretations of terminologies in the present application refer to definitions in the specification protocol TS38 series of 3GPP.

As one embodiment, the interpretations of the terminologies in the present application refer to the definitions in the specification protocol TS37 series of 3GPP.

It should be noted that, in the absence of conflicts, embodiments and features in the embodiments in any node of the present application may be applied to any other node. In the absence of conflicts, the embodiments and the features in the embodiments of the present application may be arbitrarily combined with each other.

The present application discloses a method used in a first node for wireless communication, characterized by comprising:
receiving a first message, wherein the first message comprises configuration information of a first cell, and the first message is signaling of an RRC (Radio Resource Control) sublayer; when a first condition set is satisfied, determining the first cell; and after the action of determining the first cell, applying the configuration information of the first cell,
wherein the first condition set depends on at least a first measurement result and a second measurement result; the first measurement result comprises a latest measurement result measured by a physical layer; the second measurement result comprises an expected measurement result; the second measurement result is different from the first measurement result; and before the action of applying the configuration information of the first cell, configuration information of a second cell is applied.

As one embodiment, problems to be solved by the present application comprise: how to determine the first cell.

As one embodiment, problems to be solved by the present application comprise: how to determine the first condition set.

As one embodiment, problems to be solved by the present application comprise: how to prevent the configuration information of the first cell from being applied too early or too late.

As one embodiment, characteristics of the above method comprise: when the first condition set is satisfied, determining the first cell; the first condition set depends on at least the first measurement result and the second measurement result; and the second measurement result comprises the expected measurement result.

As one embodiment, the above method optimizes robustness of mobility.

As one embodiment, the above method considers an impact of the expected measurement result when determining the first cell.

As one embodiment, the above method considers the impact of the expected measurement result when determining the first condition set.

As one embodiment, the above method prevents the configuration information of the first cell from being applied too early or too late through the expected measurement result.

According to one aspect of the present application, it is characterized by comprising:
receiving a first threshold and a second threshold,
wherein the first condition set depends on whether the first measurement result is better than the first threshold and whether the second measurement result is better than the second threshold.

According to one aspect of the present application, it is characterized in that the second measurement result depends on the first measurement result.

As one embodiment, the above method is simple to implement.

As one embodiment, the above method reduces an impact on a protocol.

According to one aspect of the present application, it is characterized in that the second measurement result depends on a measurement result before the first measurement result.

According to one aspect of the present application, it is characterized in that the second measurement result depends on the first measurement result, and the second measurement result depends on the measurement result before the first measurement result.

As one embodiment, the above method is beneficial for data inference.

As one embodiment, the above method is beneficial for improving reliability of the second measurement result.

According to one aspect of the present application, it is characterized by comprising:
receiving a first parameter set, wherein the second measurement result depends on the first parameter set.

As one embodiment, the above method is beneficial for standardization design.

As one embodiment, the above method is beneficial for improving reliability of the second measurement result.

As one embodiment, the second measurement result depends on the first parameter set, and the second measurement result depends on the first measurement result.

As one embodiment, the second measurement result depends on the first parameter set, and the second measurement result depends on the measurement result before the first measurement result.

As one embodiment, the second measurement result depends on the first parameter set, and the second measurement result depends on the first measurement result, and the second measurement result depends on the measurement result before the first measurement result.

According to one aspect of the present application, it is characterized by comprising:
before the action of receiving the first parameter set, sending a second message,
wherein the first parameter set depends on the second message.

As one embodiment, the above method is beneficial for an implementation of AI/ML.

As one embodiment, the above method is beneficial for improving reliability of the first parameter set.

As one embodiment, the above method is beneficial for obtaining an appropriate first parameter set.

According to one aspect of the present application, it is characterized in that the second message comprises at least one of a measurement result, or a movement speed of the first node, or a movement direction of the first node.

According to one aspect of the present application, it is characterized by comprising:
in response to the action of determining the first cell, sending a first measurement report, wherein the first measurement report comprises the first measurement result and the second measurement result,
wherein the action of sending the first measurement report is earlier than the action of receiving the first message; and the first message triggers the action of applying the configuration information of the first cell.

According to one aspect of the present application, it is characterized by comprising:
in response to the action of determining the first cell, sending the first measurement report; and after the action of sending the first measurement report, receiving first signaling, wherein the first signaling indicates the first cell,
wherein the action of receiving the first message is earlier than the action of sending the first measurement report; the first signaling triggers the action of applying the configuration information of the first cell; and the first signaling is signaling of a protocol layer below the RRC sublayer.

According to one aspect of the present application, it is characterized by comprising:
along with the action of applying the configuration information of the first cell, sending a third message on the first cell,
wherein the third message indicates the first cell.

The present application discloses a method used in a second node for wireless communication, characterized by comprising:
sending a first message, wherein the first message comprises configuration information of a first cell, and the first message is signaling of an RRC sublayer,
wherein when a first condition set is satisfied, a recipient of the first message determines the first cell; after the recipient of the first message determines the first cell, the recipient of the first message applies the configuration information of the first cell; the first condition set depends on at least a first measurement result and a second measurement result; the first measurement result comprises a latest measurement result measured by a physical layer; the second measurement result comprises an expected measurement result; the second measurement result is different from the first measurement result; and before the recipient of the first message applies the configuration information of the first cell, configuration information of a second cell is applied by the recipient of the first message.

According to one aspect of the present application, it is characterized by comprising:
sending a first threshold and a second threshold,
wherein the first condition set depends on whether the first measurement result is better than the first threshold and whether the second measurement result is better than the second threshold.

According to one aspect of the present application, it is characterized in that the second measurement result depends on the first measurement result.

According to one aspect of the present application, it is characterized in that the second measurement result depends on a measurement result before the first measurement result.

According to one aspect of the present application, it is characterized by comprising:
sending a first parameter set, wherein the second measurement result depends on the first parameter set.

According to one aspect of the present application, it is characterized by comprising:
before the action of sending the first parameter set, receiving a second message,
wherein the first parameter set depends on the second message.

According to one aspect of the present application, it is characterized in that the second message comprises at least one of a measurement result, or a movement speed of the recipient of the first message, or a movement direction of the recipient of the first message.

According to one aspect of the present application, it is characterized by comprising:
receiving a first measurement report, wherein the first measurement report comprises the first measurement result and the second measurement result,
wherein in response to the recipient of the first message determining the first cell, the recipient of the first message sends the first measurement report; the recipient of the first message sending the first measurement report is earlier than the recipient of the first message receiving the first message; and the first message triggers the recipient of the first message to apply the configuration information of the first cell.

According to one aspect of the present application, it is characterized by comprising:
receiving the first measurement report; and after the action of receiving the first measurement report, sending first signaling, wherein the first signaling indicates the first cell,
wherein after the recipient of the first message determines the first cell, the recipient of the first message sends the first measurement report; the recipient of the first message receiving the first message is earlier than the recipient of the first message sending the first measurement report; the first signaling triggers the recipient of the first message to apply the configuration information of the first cell; and the first signaling is signaling of a protocol layer below the RRC sublayer.

According to one aspect of the present application, it is characterized by comprising:
receiving a first RRC message, wherein the first RRC message comprises the first message,
wherein along with the recipient of the first message applying the configuration information of the first cell, the recipient of the first message sends a third message on the first cell, and the third message indicates the first cell; and a sender of the first RRC message is a recipient of the third message.

The present application discloses a method used in a third node for wireless communication, characterized by comprising:
sending a first RRC message, wherein the first RRC message comprises a first message, the first message comprises configuration information of a first cell, and the first message is signaling of an RRC sublayer; and receiving a third message, wherein the third message indicates the first cell,
wherein a recipient of the first RRC message is a sender of the third message; the sender of the third message receives the first message; when a first condition set is satisfied, the sender of the third message determines the first cell; after the sender of the third message determines the first cell, the sender of the third message applies the configuration information of the first cell; along with the sender of the third message applying the configuration information of the first cell, the sender of the third message sends the third message on the first cell; the first condition set depends on at least a first measurement result and a second measurement result; the first measurement result comprises a latest measurement result measured by a physical layer; the second measurement result comprises an expected measurement result; the second measurement result is different from the first measurement result; and before the sender of the third message applies the configuration information of the first cell, configuration information of a second cell is applied by the sender of the third message.

According to one aspect of the present application, it is characterized in that the sender of the third message receives a first threshold and a second threshold; and the first condition set depends on whether the first measurement result is better than the first threshold and whether the second measurement result is better than the second threshold.

According to one aspect of the present application, it is characterized in that the second measurement result depends on the first measurement result.

According to one aspect of the present application, it is characterized in that the second measurement result depends on a measurement result before the first measurement result.

According to one aspect of the present application, it is characterized in that the sender of the third message receives a first parameter set, and the second measurement result depends on the first parameter set.

According to one aspect of the present application, it is characterized in that before the sender of the third message receives the first parameter set, the sender of the third message sends a second message; and the first parameter set depends on the second message.

According to one aspect of the present application, it is characterized in that the second message comprises at least one of a measurement result, or a movement speed of a first node, or a movement direction of the first node.

According to one aspect of the present application, it is characterized in that in response to the sender of the third message determining the first cell, the sender of the third message sends a first measurement report, and the first measurement report comprises the first measurement result and the second measurement result; the sender of the third message sending the first measurement report is earlier than the sender of the third message receiving the first message; and the first message triggers the sender of the third message to apply the configuration information of the first cell.

According to one aspect of the present application, it is characterized in that in response to the sender of the third message determining the first cell, the sender of the third message sends the first measurement report; after the sender of the third message sends the first measurement report, the sender of the third message receives first signaling, and the first signaling indicates the first cell; the sender of the third message receiving the first message is earlier than the sender of the third message sending the first measurement report; the first signaling triggers the sender of the third message to apply the configuration information of the first cell; and the first signaling is signaling of a protocol layer below the RRC sublayer.

The present application discloses a first node for wireless communication, characterized by comprising:
a first processor receiving a first message, wherein the first message comprises configuration information of a first cell, and the first message is signaling of an RRC sublayer; when a first condition set is satisfied, determining the first cell; and after the action of determining the first cell, applying the configuration information of the first cell,
wherein the first condition set depends on at least a first measurement result and a second measurement result; the first measurement result comprises a latest measurement result measured by a physical layer; the second measurement result comprises an expected measurement result; the second measurement result is different from the first measurement result; and before the action of applying the configuration information of the first cell, configuration information of a second cell is applied.

The present application discloses a second node for wireless communication, characterized by comprising:
a second processor sending a first message, wherein the first message comprises configuration information of a first cell, and the first message is signaling of an RRC sublayer,
wherein when a first condition set is satisfied, a recipient of the first message determines the first cell; after the recipient of the first message determines the first cell, the recipient of the first message applies the configuration information of the first cell; the first condition set depends on at least a first measurement result and a second measurement result; the first measurement result comprises a latest measurement result measured by a physical layer; the second measurement result comprises an expected measurement result; the second measurement result is different from the first measurement result; and before the recipient of the first message applies the configuration information of the first cell, configuration information of a second cell is applied by the recipient of the first message.

The present application discloses a third node for wireless communication, characterized by comprising:
a third transmitter sending a first RRC message, wherein the first RRC message comprises a first message, the first message comprises configuration information of a first cell, and the first message is signaling of an RRC sublayer; and
a third receiver receiving a third message, wherein the third message indicates the first cell,
wherein a recipient of the first RRC message is a sender of the third message; the sender of the third message receives the first message; when a first condition set is satisfied, the sender of the third message determines the first cell; after the sender of the third message determines the first cell, the sender of the third message applies the configuration information of the first cell; along with the sender of the third message applying the configuration information of the first cell, the sender of the third message sends the third message on the first cell; the first condition set depends on at least a first measurement result and a second measurement result; the first measurement result comprises a latest measurement result measured by a physical layer; the second measurement result comprises an expected measurement result; the second measurement result is different from the first measurement result; and before the sender of the third message applies the configuration information of the first cell, configuration information of a second cell is applied by the sender of the third message.

As one embodiment, compared with the traditional solution, the present application has at least one of the following advantages:
- . optimizing the robustness of improving the mobility;
- . preventing the configuration information of the first cell from being applied too early or too late;
- . being simple to implement;
- . reducing the impact on the protocol;
- . being beneficial for the data inference;
- . being beneficial for the standardization design; and
- . being beneficial for improving the reliability of the second measurement result.

### Brief Description of the Drawings

Other features, purposes and advantages of the present application will become more apparent by reading the detailed description of the non-limiting embodiments in the following drawings:
FIG. 1 shows a flowchart of transmission of a first message according to one embodiment of the present application;
FIG. 2 shows a schematic diagram of a network architecture according to one embodiment of the present application;
FIG. 3 shows a schematic diagram of one embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a flowchart of wireless signal transmission according to another embodiment of the present application;
FIG. 7 shows a flowchart of wireless signal transmission according to still another embodiment of the present application;
FIG. 8 shows a schematic diagram of a second measurement result depending on a first measurement result according to one embodiment of the present application;
FIG. 9 shows a schematic diagram of a second measurement result depending on a measurement result before a first measurement result according to one embodiment of the present application;
FIG. 10 shows a schematic diagram of a second message according to one embodiment of the present application;
FIG. 11 shows a schematic diagram of an artificial intelligence processing system according to one embodiment of the present application;
FIG. 12 shows a schematic diagram of an artificial intelligence processing system according to another embodiment of the present application;
FIG. 13 shows a structural block diagram of a processing apparatus used in a first node according to one embodiment of the present application;
FIG. 14 shows a structural block diagram of a processing apparatus used in a second node according to one embodiment of the present application; and
FIG. 15 shows a structural block diagram of a processing apparatus used in a third node according to one embodiment of the present application.

### Detailed Description of Embodiments

The technical solutions of the present application will be further described in detail below in conjunction with the drawings. It should be noted that, in the absence of conflicts, embodiments and the features in the embodiments in the present application can be arbitrarily combined with each other.

### Embodiment 1

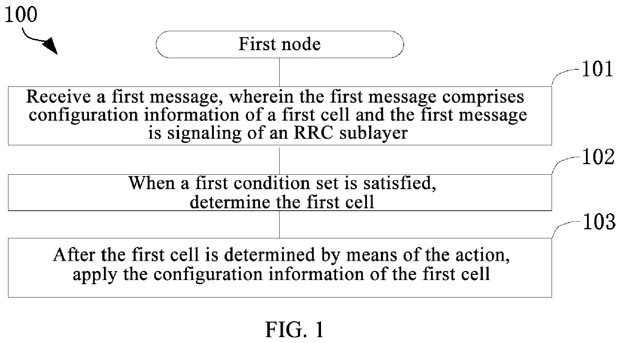

Embodiment 1 illustrates a flowchart of transmission of a first message according to one embodiment of the present application, as shown in FIG. 1. In FIG. 1, each block represents one step. It is particularly emphasized that the order of the blocks in the figure does not represent the temporal relationship between the steps represented.

In Embodiment 1, a first node in the present application in step 101, receives the first message, wherein the first message comprises configuration information of a first cell, and the first message is signaling of an RRC sublayer; in step 102, when a first condition set is satisfied, determines the first cell; and in step 103, after the action of determining the first cell, applies the configuration information of the first cell, wherein the first condition set depends on at least a first measurement result and a second measurement result; the first measurement result comprises a latest measurement result measured by a physical layer; the second measurement result comprises an expected measurement result; the second measurement result is different from the first measurement result; and before the action of applying the configuration information of the first cell, configuration information of a second cell is applied.

As one embodiment, the first message is one downlink (DL) RRC message.

As one embodiment, the first message is one sidelink (SL) RRC message.

As one embodiment, the first message is one UE-specific RRC message.

As one embodiment, the first message is at least one RRC message.

As one embodiment, the first message is at least one RRC IE (Information Element).

As one embodiment, the first message is at least one RRC field.

As one embodiment, the first message comprises one RRCReconfiguration message.

As one embodiment, the first message comprises one RRCResume message.

As one embodiment, the first message comprises one RRCReestablishment message.

As one embodiment, the first message comprises one RRCReconfigurationSidelink message.

As one embodiment, the first message comprises one DLInformationTransferMRDC message, and the one DLInformationTransferMRDC message comprises one RRCReconfiguration message.

As one embodiment, the first message comprises any one of the following: one RRCReconfiguration message or one RRCResume message or at least the former of one RRCReestablishment message or one RRCSetup message.

As one embodiment, the first message comprises one CellGroupConfig IE, and the one CellGroupConfig IE comprises the configuration information of the first cell.

As one embodiment, the first message is one CellGroupConfig IE, and the one CellGroupConfig IE comprises the configuration information of the first cell.

As one embodiment, the first message comprises one reconfiguration With Sync field, and the one reconfiguration With Sync field comprises the configuration information of the first cell.

As one embodiment, the first message comprises one ServingCellConfigCommon IE, and the one ServingCellConfigCommon IE comprises the configuration information of the first cell.

As one embodiment, the first message comprises one cellGroupId, and the one cellGroupld indicates a cell group to which the first cell belongs.

As one embodiment, the first message comprises one ServingCellConfigCommon IE, and the one ServingCellConfigCommon IE comprises the configuration information of the first cell.

As one embodiment, the first message comprises one CellGroupConfig IE, and the one CellGroupConfig IE comprises the one ServingCellConfigCommon IE.

As one sub-embodiment of this embodiment, the first message comprises one SpCellConfig field, and the one SpCellConfig field comprises the one ServingCellConfigCommon IE.

As one sub-embodiment of this embodiment, the first message comprises one ReconfigurationWithSync field, and the one Reconfiguration With Sync field comprises the one ServingCellConfigCommon IE.

As one sub-embodiment of this embodiment, the one ServingCellConfigCommon IE comprises one DownlinkConfigCommon IE.

As one sub-embodiment of this embodiment, the one ServingCellConfigCommon IE comprises one UplinkConfigCommon IE.

As one sub-embodiment of this embodiment, the one ServingCellConfigCommon IE comprises one n-TimingAdvanceOffset field.

As one sub-embodiment of this embodiment, the one ServingCellConfigCommon IE comprises one ssb-PositionsInBurst field.

As one sub-embodiment of this embodiment, the one ServingCellConfigCommon IE comprises one ss-PBCH-BlockPower field.

As one embodiment, the configuration information of the first cell comprises configuration information of a physical layer of the first cell.

As one embodiment, the configuration information of the first cell comprises a C (Cell)-RNTI (Radio Network Temporary Identifier) of the first node in the first cell.

As one embodiment, the configuration information of the first cell comprises common configuration information of the first cell.

As one embodiment, the configuration information of the first cell comprises at least part of fields in the ServingCellConfigCommon IE.

As one embodiment, the configuration information of the first cell comprises a physical cell identity (PCI) of the first cell.

As one embodiment, the configuration information of the first cell comprises a downlink common configuration (DownlinkConfigCommon) of the first cell.

As one embodiment, the configuration information of the first cell comprises an uplink common configuration (UplinkConfigCommon) of the first cell.

As one embodiment, the configuration information of the first cell comprises a period of an SSB of the first cell.

As one embodiment, the SSB is an SS (Synchronization Signals)/PBCH (Physical broadcast channel).

As one embodiment, the SSB is a Synchronization Signals Block.

As one embodiment, the configuration information of the first cell comprises a PBCH of the first cell.

As one embodiment, the first message comprises configuration information of at least one cell, and the first cell is one cell of the at least one cell.

As one embodiment, the first message comprises configuration information of a plurality of cells, and the first cell is one cell of the plurality of cells.

As one embodiment, the first message comprises only the configuration information of the first cell.

As one embodiment, the first condition set is a triggering event of handover.

As one embodiment, the first condition set is an execution condition of CHO (Conditional Handover).

As one embodiment, the first condition set is an execution condition of LTM.

As one embodiment, the first condition set is a triggering condition of LTM.

As one embodiment, the action of determining the first cell means: selecting the first cell.

As one embodiment, the action of determining the first cell means: receiving one piece of signaling, wherein the one piece of signaling indicates the first cell.

As one embodiment, the action of determining the first cell means: triggering one measurement report, wherein the one measurement report comprises a measurement result of the first cell.

As one embodiment, the action of determining the first cell means: triggering the movement to the first cell from the second cell.

As one embodiment, the action of determining the first cell means: considering the first cell as one triggered cell.

As one embodiment, the action of determining the first cell means: considering the first cell as one selected cell.

As one embodiment, the action of determining the first cell means: using the first cell as a target cell.

As one embodiment, the action of determining the first cell means: using the first cell as a target candidate cell.

As one embodiment, the action of determining the first cell means: determining to report the measurement result of the first cell.

As one embodiment, the "movement to" means: handover.

As one embodiment, the "movement to" means: switch.

As one embodiment, the action of determining the first cell means: determining that the first cell satisfies a first event.

As one embodiment, the action of determining the first cell means: determining that the first cell is a target cell of handover.

As one embodiment, the action of determining the first cell means: determining that the first cell is a target candidate cell of handover.

As one embodiment, within a time interval from the action of determining the first cell to the action of applying the configuration information of the first cell, the first node receives at least one RRC message.

As one embodiment, within the time interval from the action of determining the first cell to the action of applying the configuration information of the first cell, the first node receives at least one MAC CE.

As one embodiment, within the time interval from the action of determining the first cell to the action of applying the configuration information of the first cell, the first node does not receive any of an RRC message or a MAC CE.

As one embodiment, the phrase "after the action of determining the first cell" means: immediately after the first cell is determined.

As one embodiment, the phrase "after the action of determining the first cell" means: after a time interval after the first cell is determined.

As one embodiment, the action of applying the configuration information of the first cell comprises: applying the first message.

As one embodiment, the action of applying the configuration information of the first cell comprises: applying the configuration information of the first cell comprised in the first message.

As one embodiment, the action of applying the configuration information of the first cell comprises: sending at least one of a PUSCH or a PRACH or a PUCCH according to the configuration information of the first cell.

As one embodiment, the action of applying the configuration information of the first cell comprises: receiving at least one of a PDCCH or a PDSCH according to the configuration information of the first cell.

As one embodiment, the action of applying the configuration information of the first cell comprises: obtaining uplink synchronization according to the configuration information of the first cell.

As one embodiment, the action of applying the configuration information of the first cell comprises: obtaining downlink synchronization according to the configuration information of the first cell.

As one embodiment, the first condition set is an entering condition, and a meaning of the entering condition refers to 3GPP TS38.331.

As one embodiment, one entering condition in the first condition set comprises the first measurement result, and another entering condition in the first condition set comprises the second measurement result.

As one embodiment, the first condition set comprises at least a first inequality and a second inequality.

As one embodiment, the first condition set comprises only the first inequality and the second inequality.

As one embodiment, the first measurement result belongs to the first inequality, and the second measurement result belongs to the second inequality.

As one embodiment, the first inequality is A3-1, and the second inequality is A3-2; and the inequality A3-1 refers to 3GPP TS38.331.

As one embodiment, the first inequality is A4-1, and the second inequality is A4-2; and the inequality A4-1 refers to 3GPP TS38.331.

As one embodiment, the first inequality is A5-1 or A5-2, and the second inequality is A5-3; and the inequalities A5-1 and A5-2 refer to 3GPP TS38.331.

As one embodiment, the first condition set belongs to the first event.

As one embodiment, the first measurement result and the second measurement result belong to the first event.

As one embodiment, the first condition set is Event A3.

As one embodiment, the first condition set is Event A4.

As one embodiment, the first condition set is Event A5.

As one embodiment, the first condition set is Event A7.

As one embodiment, the first condition set is Event A8.

As one embodiment, the first condition set belongs to the first event and a second event.

As one embodiment, the first measurement result belongs to the first event, and the second measurement result belongs to the second event.

As one embodiment, the first condition set is Event A3 and Event A7.

As one embodiment, the first condition set is Event A3 and Event E1.

As one embodiment, the first condition set is Event A4 and Event A7.

As one embodiment, the first condition set is Event A4 and Event E1.

As one embodiment, the first condition set is Event A5 and Event A7.

As one embodiment, the first condition set is Event A5 and Event E1.

As one embodiment, the first measurement result is Mn, and a definition of the Mn refers to Section 5.5.4 of 3GPP TS38.331.

As one embodiment, the first measurement result is Mp, and a definition of the Mp refers to Section 5.5.4 of 3GPP TS38.331.

As one embodiment, the phrase "the first condition set depends on at least a first measurement result and a second measurement result" comprises: the first condition set belongs to the first event, and the first event depends on at least the first measurement result and the second measurement result.

As one sub-embodiment of the above embodiment, when the first event is satisfied, the first condition set is satisfied.

As one sub-embodiment of the above embodiment, the first event comprises that the first measurement result is better than a first threshold, and the second measurement result is better than a second threshold.

As one sub-embodiment of the above embodiment, the first event comprises that the first measurement result is worse than the first threshold, and the second measurement result is better than the second threshold.

As one sub-embodiment of the above embodiment, the first event comprises that the first measurement result is better than the first threshold, and the second measurement result is worse than the second threshold.

As one sub-embodiment of the above embodiment, the first event is that the second measurement result is better than the first measurement result.

As one embodiment, the phrase "the first condition set depends on at least a first measurement result and a second measurement result" comprises: the first condition set belongs to the first event and the second event, the first event comprises at least the first measurement result, and the second event comprises at least the second measurement result.

As one sub-embodiment of the above embodiment, when both the first event and the second event are satisfied, the first condition set is satisfied.

As one embodiment, the phrase "the first condition set depends on at least a first measurement result and a second measurement result" comprises: whether the first condition set is satisfied is related to at least the first measurement result and the second measurement result.

As one embodiment, the phrase "the first condition set depends on at least a first measurement result and a second measurement result" comprises: at least the first measurement result and the second measurement result are used for determining whether the first condition set is satisfied.

As one embodiment, the first condition set depends on whether the second measurement result is better than the first measurement result.

As one embodiment, when the second measurement result is better than the first measurement result, the first condition set is satisfied; and when the second measurement result is not better than the first measurement result, the first condition set is not satisfied.

As one embodiment, the first condition set depends on whether a difference between the second measurement result and the first measurement result exceeds one threshold.

As one embodiment, when the difference between the second measurement result and the first measurement result exceeds one threshold, the first condition set is satisfied; and when the difference between the second measurement result and the first measurement result does not exceed one threshold, the first condition set is not satisfied.

As one embodiment, the first condition set depends on whether both the second measurement result and the first measurement result exceed one threshold.

As one embodiment, when both the second measurement result and the first measurement result exceed one threshold, the first condition set is satisfied; and when either the second measurement result or the first measurement result does not exceed one threshold, the first condition set is not satisfied.

As one embodiment, the phrase "the first measurement result comprises a latest measurement result measured by a physical layer" means that: the first measurement result is a latest measured measurement result from the physical layer.

As one embodiment, the phrase "the first measurement result comprises a latest measurement result measured by a physical layer" means that: the first measurement result is the latest measurement result measured by the physical layer.

As one embodiment, the phrase "the first measurement result comprises a latest measurement result measured by a physical layer" means that: the first measurement result is obtained through an L3 filter of the latest measurement result measured by the physical layer.

As one embodiment, the latest measured measurement result means: a measurement result measured within one recent period.

As one embodiment, the above period is RRC-configured.

As one embodiment, the above period is default.

As one embodiment, the above period is determined according to a period of an RS resource.

As one embodiment, the above period is a measurement period.

As one embodiment, the above period is an evaluation period.

As one embodiment, the above period is a statistical period.

As one embodiment, the first measurement result is an L1 measurement result.

As one embodiment, the first measurement result is an L3 measurement result.

As one embodiment, the first measurement result and the second measurement result are RSRP; and units of the first measurement result and the second measurement result are dBm.

As one embodiment, the first measurement result and the second measurement result are RSRQ; and units of the first measurement result and the second measurement result are dB.

As one embodiment, the first measurement result and the second measurement result are RS-SINRs; and units of the first measurement result and the second measurement result are dB.

As one embodiment, the first measurement result is **Mₙ**, and the **Mₙ** refers to Section 5.5.3.2 of 3GPP TS38.331.

As one embodiment, the first measurement result is **Fₙ** = **(1 - a)** * **Fₙ₋₁** + a * **Mₙ**, and the **Fₙ**, the **a,** the **Fₙ₋₁**, and the **Mₙ** refer to Section 5.5.3.2 of 3GPP TS38.331.

As one embodiment, the second measurement result is a predicted measurement result.

As one embodiment, the expected measurement result is one estimated measurement result.

As one embodiment, the expected measurement result is one inferred measurement result.

As one embodiment, the expected measurement result is one measurement result obtained through model inference.

As one embodiment, the expected measurement result is one assumed measurement result.

As one embodiment, the expected measurement result is one expected measurement result after the first measurement result.

As one embodiment, the expected measurement result is one expected measurement result within a target time interval.

As one embodiment, the expected measurement result is one expected measurement result after the target time interval.

As one embodiment, the target time interval is after the first measurement result is determined.

As one embodiment, the target time interval is one time interval immediately after the first measurement result is determined.

As one embodiment, the action of determining the first cell triggers the action of applying the configuration information of the first cell.

As one embodiment, the first node determines a first parameter set, and the expected measurement result depends on the first parameter set.

As one embodiment, the second measurement result is not the first measurement result.

As one embodiment, the second measurement result and the first measurement result are two values.

As one embodiment, the second measurement result and the first measurement result are equal.

As one embodiment, the second measurement result and the first measurement result are not equal.

As one embodiment, the second measurement result and the first measurement result have the same unit.

As one embodiment, the second measurement result and the first measurement result have the same dimension.

As one embodiment, the second measurement result and the first measurement result are for the first cell.

As one embodiment, the second measurement result and the first measurement result are for the second cell.

As one embodiment, the second measurement result is for the first cell, and the first measurement result is for the second cell.

As one embodiment, the second measurement result is for the second cell, and the first measurement result is for the first cell.

As one embodiment, the first measurement result is based on a measurement executed within a first time interval; and the second measurement result is based on a measurement executed within a second time interval.

As one embodiment, the first time interval and the second time interval are the same.

As one embodiment, the first time interval and the second time interval are different.

As one embodiment, the first time interval and the second time interval overlap.

As one embodiment, the first time interval and the second time interval do not overlap.

As one embodiment, the first time interval belongs to the second time interval.

As one embodiment, that one measurement result is for one cell means that: the one measurement result is a measurement result of the one cell.

As one embodiment, that one measurement result is for one cell means that: obtaining of the one measurement result is based on a measurement for the one cell.

As one embodiment, the sentence "before the action of applying the configuration information of the first cell, configuration information of a second cell is applied" means that: the second cell is a source serving cell of the first node.

As one embodiment, the sentence "before the action of applying the configuration information of the first cell, configuration information of a second cell is applied" means that: the second cell is a source PCell of the first node.

As one embodiment, the sentence "before the action of applying the configuration information of the first cell, configuration information of a second cell is applied" means that: the second cell is a source PSCell of the first node.

As one embodiment, the first cell is a neighboring cell of the second cell.

As one embodiment, the first cell is a candidate cell of the second cell.

As one embodiment, the first cell is a target cell of the second cell.

As one embodiment, the first node has a first UE capacity.

As one sub-embodiment of the above embodiment, when the first node has the first UE capacity, the first condition set depends on at least the first measurement result and the second measurement result.

As one sub-embodiment of the above embodiment, only when the first node has the first UE capacity, the first condition set depends on at least the first measurement result and the second measurement result.

As one sub-embodiment of the above embodiment, the first UE capacity comprises supporting AI or machine learning.

As one sub-embodiment of the above embodiment, the first UE capacity comprises having an AI or machine learning module.

As one sub-embodiment of the above embodiment, the first UE capacity comprises generating a trained model using training data or generating partial parameters in a trained model using trained data.

As one sub-embodiment of the above embodiment, the first UE capacity comprises generating at least part of the first message.

As one sub-embodiment of the above embodiment, the first UE capacity comprises generating the second measurement result.

As one sub-embodiment of the above embodiment, the first UE capacity comprises generating the second threshold.

As one sub-embodiment of the above embodiment, the first UE capacity comprises generating Q1.

As one sub-embodiment of the above embodiment, the first node sends first information, and the first information indicates that the first node has the first UE capacity; and the second node receives the first information.

### Embodiment 2

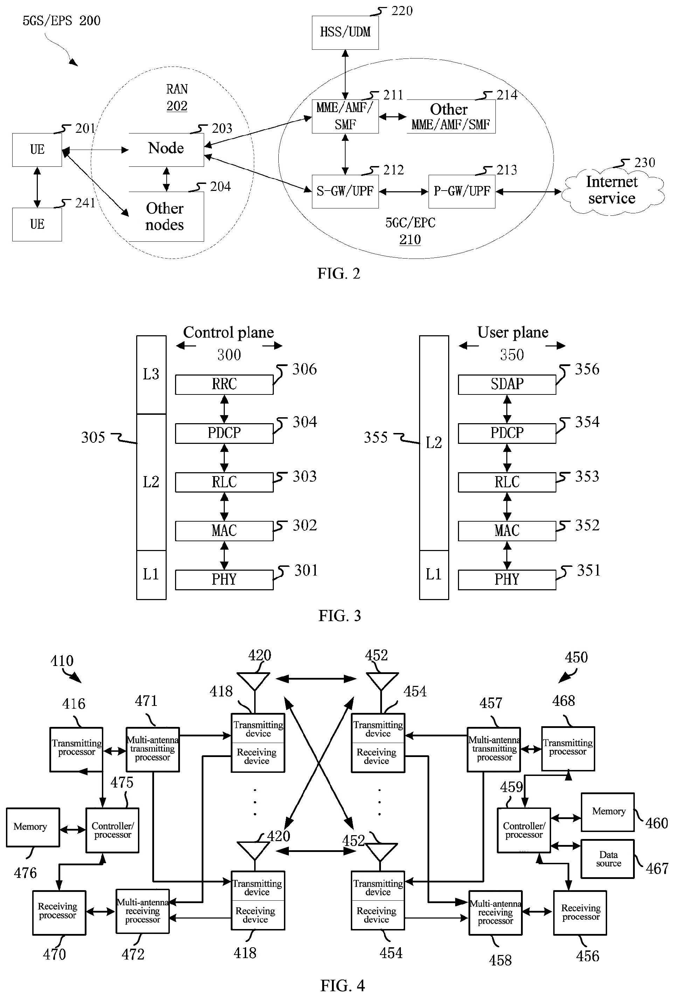

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but these entities/interfaces are not shown for simplicity. As shown in the figure, the 5GS/EPS provides packet switching services, but those skilled in the art will readily understand that various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to the other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The node 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land transportation vehicle, an automobile, a wearable device, or any other similar functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address allocation and other functions. The P-GW/UPF213 is connected to the Internet service 230. The Internet service 230 comprises an Internet protocol service corresponding to an operator, and may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the UE201 is one BaseStation (BS) device.

As one embodiment, the UE201 is one relay device.

As one embodiment, the UE201 is one gateway device.

As one embodiment, the node 203 corresponds to a second node in the present application.

As one embodiment, the node 203 is one base station device.

As one embodiment, the node 203 is one piece of user equipment.

As one embodiment, the node 203 is one relay device.

As one embodiment, the node 203 is one gateway device.

Typically, the UE201 is one piece of user equipment, and the node 203 is one base station device.

Typically, the UE201 is one piece of user equipment, and the node 203 is one piece of user equipment.

Typically, the UE201 is one base station device, and the node 203 is one base station device.

As one embodiment, the node 204 corresponds to a third node in the present application.

As one embodiment, the node 204 is one base station device.

As one embodiment, the node 204 is one piece of user equipment.

As one embodiment, the node 204 is one relay device.

As one embodiment, the node 204 is one gateway device.

As one embodiment, the UE201 maintains connection with the node 203 and the node 204 simultaneously.

As one embodiment, the node 203 and the node 204 are connected through ideal backhaul.

As one embodiment, the node 203 and the node 204 are connected through non-ideal backhaul.

As one example, the node 203 and the node 204 simultaneously provide wireless resources to the UE201.

As one example, the node 203 and the node 204 do not simultaneously provide wireless resources to the UE201.

As one embodiment, the node 203 and the node 204 are the same node.

As one embodiment, the node 203 and the node 204 are two different nodes.

As one embodiment, the node 203 and the node 204 are of the same type.

As one embodiment, the node 203 and the node 204 are of different types.

Typically, the UE201 is one piece of user equipment, the node 203 is one base station device, and the node 204 is one base station device.

Typically, the UE201 is one piece of user equipment, the node 203 is one piece of user equipment, and the node 204 is one piece of user equipment.

Typically, the UE201 is one base station device, the node 203 is one base station device, and the node 204 is one base station device.

As one embodiment, the user equipment supports transmission in a non-terrestrial network (NTN).

As one embodiment, the user equipment supports transmission in a terrestrial network.

As one embodiment, the user equipment supports dual connection (DC) transmission.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device that supports low-delay and high-reliability transmission.

As one embodiment, the user equipment comprises a test device.

As one embodiment, the user equipment comprises a signaling tester.

As one embodiment, the user equipment comprises an IAB (Integrated Access and Backhaul)-MT.

As one embodiment, the user equipment supports generating at least part of a first message using AI or machine learning.

As one embodiment, the user equipment supports generating a second measurement result using AI or machine learning.

As one embodiment, the user equipment supports generating a second threshold using AI or machine learning.

As one embodiment, the user equipment supports generating Q1 using AI or machine learning.

As one embodiment, the user equipment supports generating a trained model using training data or generating partial parameters in a trained model using trained data.

As one embodiment, the user equipment supports determining at least part of the first message through training.

As one embodiment, the user equipment supports determining the second measurement result through training.

As one embodiment, the user equipment supports determining the second threshold through training.

As one embodiment, the user equipment supports generating the second measurement result through training a first measurement result and a measurement result before the first measurement result.

As one embodiment, the user equipment supports generating the second measurement result through training the first measurement result and the measurement result before the first measurement result.

As one embodiment, the base station device supports transmission in a non-terrestrial network.

As one embodiment, the base station device supports transmission in a terrestrial network.

As one embodiment, the base station device comprises a base transceiver station (BTS).

As one embodiment, the base station device comprises a NodeB (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device comprises a CU (Centralized Unit).

As one embodiment, the base station device comprises a DU (Distributed Unit).

As one embodiment, the base station device comprises a TRP (Transmitter Receiver Point).

As one embodiment, the base station device comprises a Macro Cellular base station.

As one embodiment, the base station device comprises a Micro Cell base station.

As one embodiment, the base station device comprises a Pico Cell base station.

As one embodiment, the base station device comprises a Femtocell.

As one embodiment, the base station device comprises a flight platform device.

As one embodiment, the base station device comprises a satellite device.

As one embodiment, the base station device comprises a test device.

As one embodiment, the base station device comprises a signaling tester.

As one embodiment, the base station device comprises a gateway device.

As one embodiment, the base station device comprises an IAB-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the relay device comprises an L2 relay.

As one embodiment, the relay device comprises a router.

As one embodiment, the relay device comprises a switch.

As one embodiment, the relay device comprises a gateway device.

As one embodiment, the relay device comprises user equipment.

As one embodiment, the relay device comprises a base station device.

### Embodiment 3

Embodiment 3 shows a schematic diagram of an embodiment of one wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (physical layer) signal processing functions. The L1 layer will be referred to as a PHY301 herein. A Layer 2 (L2 layer) 305 is above the PHY301, and comprises a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer packets, retransmission of lost data packets, and reordering of data packets to compensate for unordered reception caused by a HARQ (Hybrid Automatic Repeat Request). The MAC sublayer 302 provides multiplexing between logical and transport channels. The MAC sublayer 302 is also responsible for allocating various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers by using RRC signaling. The radio protocol architecture for the user plane 350 comprises the Layer 1 (L1 layer) and the Layer 2 (L2 layer). The radio protocol architecture in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the wireless protocol architecture in FIG. 3 is applicable to a first node in the present application.

As one embodiment, the wireless protocol architecture in FIG. 3 is applicable to a second node in the present application.

As one embodiment, the wireless protocol architecture in FIG. 3 is applicable to a third node in the present application.

As one embodiment, a first message in the present application is generated in an RRC306.

As one embodiment, a first threshold in the present application is generated in the RRC306.

As one embodiment, a second threshold in the present application is generated in the RRC306.

As one embodiment, a first parameter set in the present application is generated in the RRC306.

As one embodiment, the first parameter set in the present application is generated in a MAC302 or a MAC352.

As one embodiment, the first parameter set in the present application is generated in the PHY301 or a PHY351.

As one embodiment, a second message in the present application is generated in the RRC306.

As one embodiment, the second message in the present application is generated in the MAC302 or the MAC352.

As one embodiment, the second message in the present application is generated in the PHY301 or the PHY351.

As one embodiment, a first measurement report in the present application is generated in the RRC306.

As one embodiment, the first measurement report in the present application is generated in the MAC302 or the MAC352.

As one embodiment, the first measurement report in the present application is generated in the PHY301 or the PHY351.

As one embodiment, first signaling in the present application is generated in the MAC302 or the MAC352.

As one embodiment, the first signaling in the present application is generated in the PHY301 or the PHY351.

As one embodiment, a third message in the present application is generated in the RRC306.

As one embodiment, the third message in the present application is generated in the MAC302 or the MAC352.

As one embodiment, the third message in the present application is generated in the PHY301 or the PHY351.

### Embodiment 4

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, an upper-layer data packet from a core network is provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for the retransmission of lost packets and signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410 and mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to subcarriers, multiplexes with a reference signal (e.g., pilot) in the time domain and/or frequency domain, and then uses an inverse fast Fourier transform (IFFT) to produce a physical channel that carries a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 converts the baseband multi-carrier symbol stream subjected to the receiving analog precoding/beamforming operations from the time domain to the frequency domain using a fast Fourier transform (FFT). In the frequency domain, a physical layer data signal and the reference signal are demultiplexed by the receiving processor 456, wherein the reference signal is used for channel estimation, and the data signal is subjected to multi-antenna detection in the multi-antenna receiving processor 458 to recover any spatial streams destined for the first communication device 450. Symbols on each spatial stream are demodulated and recovered in the receiving processor 456, and a soft decision is generated. The receiving processor 456 then decodes and deinterleaves the soft decision to recover upper-layer data and control signals transmitted by the second communication device 410 on the physical channel. The upper-layer data and control signals are then provided to the controller/processor 459. The controller/processor 459 implements functions of the L2 layer. The controller/processor 459 may be associated with the memory 460 that stores program code and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to a sending function at the second communication device 410 as described in the transmission from the second communication device 410 to the first communication device 450, the controller/processor 459 implements header compression, encryption, packet segmentation and reordering, and multiplexing between logical and transport channels based on radio resource allocation, and implements the function of the L2 layer for the user plane and the control plane. The controller/processor 459 is also responsible for retransmission of lost packets and signaling to the second communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper-layer data packets from the controller/processor 475 can be provided to the core network.

As one embodiment, the first communication device 450 comprises: at least one processor and at least one memory, wherein the at least one memory comprises computer program codes; the at least one memory and the computer program codes are configured to be used together with the at least one processor, and the first communication device 450 at least: receives a first message, wherein the first message comprises configuration information of a first cell, and the first message is signaling of an RRC sublayer; when a first condition set is satisfied, determines the first cell; and after the action of determining the first cell, applies the configuration information of the first cell, wherein the first condition set depends on at least a first measurement result and a second measurement result; the first measurement result comprises a latest measurement result measured by a physical layer; the second measurement result comprises an expected measurement result; the second measurement result is different from the first measurement result; and before the action of applying the configuration information of the first cell, configuration information of a second cell is applied.

As one embodiment, the first communication device 450 comprises: a memory storing a computer-readable instruction program, wherein the computer-readable instruction program generates actions when executed by at least one processor, and the actions comprise: receiving the first message, wherein the first message comprises the configuration information of the first cell, and the first message is signaling of the RRC sublayer; when the first condition set is satisfied, determining the first cell; and after the action of determining the first cell, applying the configuration information of the first cell, wherein the first condition set depends on at least the first measurement result and the second measurement result; the first measurement result comprises the latest measurement result measured by the physical layer; the second measurement result comprises the expected measurement result; the second measurement result is different from the first measurement result; and before the action of applying the configuration information of the first cell, the configuration information of the second cell is applied.

As one embodiment, the second communication device 410 corresponds to a second node in the present application; the second communication device 410 comprises: at least one processor and at least one memory, wherein the at least one memory comprises computer program codes; and the at least one memory and the computer program codes are configured to be used together with the at least one processor. The second communication device 410 at least: sends the first message, wherein the first message comprises the configuration information of the first cell, and the first message is signaling of the RRC sublayer, wherein when the first condition set is satisfied, a recipient of the first message determines the first cell; after the recipient of the first message determines the first cell, the recipient of the first message applies the configuration information of the first cell; the first condition set depends on at least the first measurement result and the second measurement result; the first measurement result comprises the latest measurement result measured by the physical layer; the second measurement result comprises the expected measurement result; the second measurement result is different from the first measurement result; and before the recipient of the first message applies the configuration information of the first cell, the configuration information of the second cell is applied by the recipient of the first message.

As one embodiment, the second communication device 410 corresponds to the second node in the present application; the second communication device 410 comprises: a memory storing a computer-readable instruction program, wherein the computer-readable instruction program generates actions when executed by at least one processor, and the actions comprise: sending the first message, wherein the first message comprises the configuration information of the first cell, and the first message is signaling of the RRC sublayer, wherein when the first condition set is satisfied, the recipient of the first message determines the first cell; after the recipient of the first message determines the first cell, the recipient of the first message applies the configuration information of the first cell; the first condition set depends on at least the first measurement result and the second measurement result; the first measurement result comprises the latest measurement result measured by the physical layer; the second measurement result comprises the expected measurement result; the second measurement result is different from the first measurement result; and before the recipient of the first message applies the configuration information of the first cell, the configuration information of the second cell is applied by the recipient of the first message.

As one embodiment, the second communication device 410 corresponds to a third node in the present application; the second communication device 410 comprises: at least one processor and at least one memory, wherein the at least one memory comprises computer program codes; and the at least one memory and the computer program codes are configured to be used together with the at least one processor. The second communication device 410 at least: sends a first RRC message, wherein the first RRC message comprises the first message, the first message comprises the configuration information of the first cell, and the first message is signaling of the RRC sublayer; and receives a third message, wherein the third message indicates the first cell, wherein a recipient of the first RRC message is a sender of the third message; the sender of the third message receives the first message; when the first condition set is satisfied, the sender of the third message determines the first cell; after the sender of the third message determines the first cell, the sender of the third message applies the configuration information of the first cell; along with the sender of the third message applying the configuration information of the first cell, the sender of the third message sends the third message on the first cell; the first condition set depends on at least the first measurement result and the second measurement result; the first measurement result comprises the latest measurement result measured by the physical layer; the second measurement result comprises the expected measurement result; the second measurement result is different from the first measurement result; and before the sender of the third message applies the configuration information of the first cell, the configuration information of the second cell is applied by the sender of the third message.

As one embodiment, the second communication device 410 corresponds to the third node in the present application; the second communication device 410 comprises: a memory storing a computer-readable instruction program, wherein the computer-readable instruction program generates actions when executed by at least one processor, and the actions comprise: sending the first RRC message, wherein the first RRC message comprises the first message, the first message comprises the configuration information of the first cell, and the first message is signaling of the RRC sublayer; and receiving the third message, wherein the third message indicates the first cell, wherein the recipient of the first RRC message is the sender of the third message; the sender of the third message receives the first message; when the first condition set is satisfied, the sender of the third message determines the first cell; after the sender of the third message determines the first cell, the sender of the third message applies the configuration information of the first cell; along with the sender of the third message applying the configuration information of the first cell, the sender of the third message sends the third message on the first cell; the first condition set depends on at least the first measurement result and the second measurement result; the first measurement result comprises the latest measurement result measured by the physical layer; the second measurement result comprises the expected measurement result; the second measurement result is different from the first measurement result; and before the sender of the third message applies the configuration information of the first cell, the configuration information of the second cell is applied by the sender of the third message.

As one embodiment, at least one of the antenna 452, the receiving device 454, the receiving processor 456, and the controller/processor 459 is used for receiving the first message.

As one embodiment, at least one of the antenna 420, the transmitting device 418, the transmitting processor 416, and the controller/processor 475 is used for sending the first message.

As one embodiment, at least one of the antenna 452, the receiving device 454, the receiving processor 456, and the controller/processor 459 is used for receiving a first threshold.

As one embodiment, at least one of the antenna 420, the transmitting device 418, the transmitting processor 416, and the controller/processor 475 is used for sending the first threshold.

As one embodiment, at least one of the antenna 452, the receiving device 454, the receiving processor 456, and the controller/processor 459 is used for receiving a second threshold.

As one embodiment, at least one of the antenna 420, the transmitting device 418, the transmitting processor 416, and the controller/processor 475 is used for sending the second threshold.

As one embodiment, at least one of the antenna 452, the receiving device 454, the receiving processor 456, and the controller/processor 459 is used for receiving first signaling.

As one embodiment, at least one of the antenna 420, the transmitting device 418, the transmitting processor 416, and the controller/processor 475 is used for sending the first signaling.

As one embodiment, at least one of the antenna 452, the receiving device 454, the receiving processor 456, and the controller/processor 459 is used for receiving a first parameter set.

As one embodiment, at least one of the antenna 452, the receiving device 454, the receiving processor 456, and the controller/processor 459 is used for sending the first parameter set.

As one embodiment, at least one of the antenna 420, the transmitting device 418, the transmitting processor 416, and the controller/processor 475 is used for sending the first parameter set.

As one embodiment, at least one of the antenna 452, the transmitting device 454, the transmitting processor 468, and the controller/processor 459 is used for sending a second message.

As one embodiment, at least one of the antenna 452, the transmitting device 454, the transmitting processor 468, and the controller/processor 459 is used for receiving the second message.

As one embodiment, at least one of the antenna 420, the receiving device 418, the receiving processor 470, and the controller/processor 475 is used for receiving the second message.

As one embodiment, at least one of the antenna 452, the transmitting device 454, the transmitting processor 468, and the controller/processor 459 is used for sending a first measurement report.

As one embodiment, at least one of the antenna 420, the receiving device 418, the receiving processor 470, and the controller/processor 475 is used for receiving the first measurement report.

As one embodiment, at least one of the antenna 452, the transmitting device 454, the transmitting processor 468, and the controller/processor 459 is used for sending the third message.

As one embodiment, at least one of the antenna 420, the receiving device 418, the receiving processor 470, and the controller/processor 475 is used for receiving the third message.

As one embodiment, the first communication device 450 corresponds to a first node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

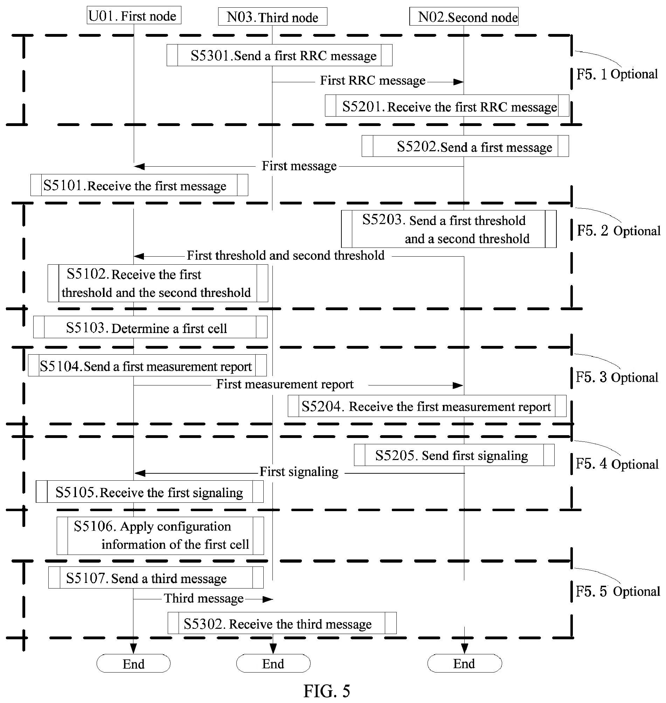

Embodiment 5 illustrates a flowchart of wireless signal transmission according to one embodiment of the present application, as shown in FIG. 5. It is particularly noted that the order in this example does not limit the signal transmission order and implementation order in the present application.

For **a first node U01,** in step S5101, a first message is received, wherein the first message comprises configuration information of a first cell, and the first message is signaling of an RRC sublayer; in step S5102, a first threshold and a second threshold are received, wherein a first condition set depends on whether a first measurement result is better than the first threshold and whether a second measurement result is better than the second threshold; in step S5103, when the first condition set is satisfied, the first cell is determined; in step S5104, a first measurement report is sent; in step S5105, after the action of sending the first measurement report, first signaling is received, wherein the first signaling indicates the first cell; in step S5106, after the action of determining the first cell, the configuration information of the first cell is applied; and in step S5107, along with the action of applying the configuration information of the first cell, a third message is sent on the first cell, wherein the third message indicates the first cell.

For **a second node N02,** in step S5201, a first RRC message is received, wherein the first RRC message comprises the first message, and a sender of the first RRC message is a recipient of the third message; in step S5202, the first message is sent; in step S5203, the first threshold and the second threshold are sent; in step S5204, the first measurement report is received; and in step S5205, the first signaling is sent.

For **a third node N03,** in step S5301, the first RRC message is sent; and in step S5302, the third message is received.

In Embodiment 5, the first condition set depends on at least the first measurement result and the second measurement result; the first measurement result comprises a latest measurement result measured by a physical layer; the second measurement result comprises an expected measurement result; the second measurement result is different from the first measurement result; and before the action of applying the configuration information of the first cell, configuration information of a second cell is applied.

As one embodiment, the first node U01 and the second node N02 are connected in a wireless mode.

As one embodiment, the first node U01 and the second node N02 are connected in a wired mode.

As one embodiment, the first node U01 and the second node N02 are connected via a Uu interface.

As one embodiment, the first node U01 and the second node N02 are connected through an IAB interface.

As one embodiment, the first node U01 and the second node N02 are connected through a PC5 interface.

As one embodiment, the third node N03 and the second node N02 are connected through a wireless interface.

As one embodiment, the third node N03 and the second node N02 are connected through a wired interface.

As one embodiment, the third node N03 and the second node N02 are connected through an Xn interface.

As one embodiment, the third node N03 and the second node N02 are connected through an X2 interface.

As one embodiment, backhaul between the third node N03 and the second node N02 is ideal.

As one embodiment, backhaul between the third node N03 and the second node N02 is non-ideal.

As one embodiment, the third node N03 and the second node N02 belong to the same CU.

As one embodiment, the third node N03 and the second node N02 belong to the same DU.

As one embodiment, the third node N03 and the second node N02 belong to different CUs.

As one embodiment, the third node N03 and the second node N02 belong to different DUs.

As one embodiment, the third node N03 and the second node N02 belong to the same RAT.

As one embodiment, the third node N03 and the second node N02 belong to different RATs.

As one embodiment, the third node N03 is the second node N02.

As one embodiment, the third node N03 is not the second node N02.

As one embodiment, a dotted block F5.1 exists.

As one sub-embodiment of the above embodiment, the first RRC message is one RRC container.

As one sub-embodiment of the above embodiment, the first RRC message is one piece of XnAP signaling.

As one sub-embodiment of the above embodiment, the first RRC message is transmitted through an Xn interface.

As one sub-embodiment of the above embodiment, the first RRC message is transmitted through an X2 interface.

As one sub-embodiment of the above embodiment, the first RRC message comprises one HandoverCommand IE, the one HandoverCommand IE comprises one RRCReconfiguration message, and the one RRCReconfiguration message comprises the first message.

As one sub-embodiment of the above embodiment, the first RRC message comprises one handoverCommandMessage field, the one handoverCommandMessage field comprises one RRCReconfiguration message, and the one RRCReconfiguration message comprises the first message.

As one sub-embodiment of the above embodiment, the first RRC message comprises one RRCReconfiguration message, and the one RRCReconfiguration message comprises the first message.

As one sub-embodiment of the above embodiment, the first RRC message carries the first message.

As one sub-embodiment of the above embodiment, the first message is at least part of the first RRC message.

As one sub-embodiment of the above embodiment, the third node N03 generates the first message.

As one sub-embodiment of the above embodiment, the third node N03 generates the second threshold; and the first RRC message comprises the second threshold.

As one sub-embodiment of the above embodiment, the first RRC message comprises the second threshold.

As one embodiment, the dotted block F5.1 does not exist.

As one sub-embodiment of the above embodiment, the second node N02 generates the first message.

As one sub-embodiment of the above embodiment, the second node N02 generates the second threshold.

As one embodiment, a dotted block F5.2 exists.

As one sub-embodiment of the above embodiment, the second node N02 sends the second threshold according to a first UE capacity reported by the first node U01.

As one sub-embodiment of the above embodiment, when at least the first measurement result is better than the first threshold, and the second measurement result is better than the second threshold, the first condition set is satisfied; when the first measurement result is not better than the first threshold, or the second measurement result is not better than the second threshold, the first condition set is not satisfied; and the second measurement result and the first measurement result are for the first cell.

As one sub-embodiment of the above embodiment, when the first measurement result is not better than the first threshold, and the second measurement result is better than the second threshold, the first condition set is satisfied; and when the first measurement result is not better than the first threshold, or the second measurement result is not better than the second threshold, the first condition set is not satisfied.

As one embodiment, the dotted block F5.2 does not exist.

As one embodiment, a dotted box F5.3 does not exist, and a dotted box F5.4 does not exist.

As one embodiment, the dotted block F5.3 exists, and the dotted block F5.4 does not exist.

As one sub-embodiment of the above embodiment, the step S5102 is before the step S5103; the step S5103 is before the step S5104; and the step S5104 is before the step S5101.

As one sub-embodiment of the above embodiment, the first threshold and the second threshold belong to one RRCReconfiguration message.

As one sub-embodiment of the above embodiment, the first threshold and the second threshold belong to one RRCResume message.

As one sub-embodiment of the above embodiment, the first threshold and the second threshold belong to one MeasConfig IE.

As one sub-embodiment of the above embodiment, the first threshold and the second threshold belong to one ReportConfigNR IE.

As one sub-embodiment of the above embodiment, the first threshold and the second threshold belong to one ReportConfigInterRAT IE.

As one sub-embodiment of the above embodiment, in response to the action of determining the first cell, the first measurement report is sent, and the first measurement report comprises the first measurement result and the second measurement result; the action of sending the first measurement report is earlier than the action of receiving the first message; and the first message triggers the action of applying the configuration information of the first cell.

As one sub-embodiment of the above embodiment, the first measurement report is one RRC message.

As one sub-embodiment of the above embodiment, the first measurement report is one MeasurementReport message.

As one sub-embodiment of the above embodiment, the first measurement report comprises one MeasResults IE.

As one sub-embodiment of the above embodiment, the first measurement report comprises at least one measId field.

As one sub-embodiment of the above embodiment, the first measurement result and the second measurement result are associated with the same measId.

As one sub-embodiment of the above embodiment, the first measurement result and the second measurement result are associated with two different measIds.

As one sub-embodiment of the above embodiment, the first measurement report comprises at least one MeasResultNR field.

As one sub-embodiment of the above embodiment, the first measurement report comprises at least one MeasResultEUTRA field.

As one sub-embodiment of the above embodiment, a first list in the first measurement report comprises the first measurement result, and a second list in the first measurement report comprises the second measurement result.

As one sub-embodiment of the above embodiment, the first list in the first measurement report comprises the first measurement result and the second measurement result.

As one sub-embodiment of the above embodiment, one measResultServingMOList field in the first measurement report configures the first list.

As one sub-embodiment of the above embodiment, one measResultNeighCells field in the first measurement report configures the first list.

As one sub-embodiment of the above embodiment, one measResultServingMOList field in the first measurement report configures the second list.

As one sub-embodiment of the above embodiment, one measResultNeighCells field in the first measurement report configures the second list.

As one sub-embodiment of the above embodiment, the action of sending the first measurement report triggers the action of receiving the first message.

As one sub-embodiment of the above embodiment, the action of sending the first measurement report assists the second node N02 in sending the first message.

As one sub-embodiment of the above embodiment, the first message is received after the action of sending the first measurement report.

As one sub-embodiment of the above embodiment, the first measurement report indicates a measurement result of the first cell, and the first message comprises an identifier of the first cell.

As one embodiment, the dotted box F5.3 exists, and the dotted box F5.4 exists.

As one sub-embodiment of the above embodiment, the step S5103 is before the step S5104, and the step S5104 is before the step S5105.

As one sub-embodiment of the above embodiment, the step S5104 is before the step S5105, and the step S5105 is before the step S5103.

As one sub-embodiment of the above embodiment, the step S5101 and the step S5102 are before the step S5104.

As one sub-embodiment of the above embodiment, the step S5101 is before the step S5102.

As one sub-embodiment of the above embodiment, the step S5102 is before the step S5101.

As one sub-embodiment of the above embodiment, the step S5102 belongs to the step S5101.

As one sub-embodiment of the above embodiment, the dotted box F5.2 exists.

As one sub-embodiment of the above embodiment, the dotted box F5.2 does not exist.

As one sub-embodiment of the above embodiment, sending of the first measurement report depends on the first threshold and the second threshold.

As one sub-embodiment of the above embodiment, the sending of the first measurement report does not depend on at least one of the first threshold and the second threshold.

As one sub-embodiment of the above embodiment, in response to the action of determining the first cell, the first measurement report is sent; and after the action of sending the first measurement report, the first signaling is received, and the first signaling indicates the first cell, wherein the action of receiving the first message is earlier than the action of sending the first measurement report; the first signaling triggers the action of applying the configuration information of the first cell; and the first signaling is signaling of a protocol layer below the RRC sublayer.

As one sub-embodiment of the above embodiment, the first message comprises a first index, and the first index indicates the first cell.

As one sub-embodiment of the above embodiment, the first message is associated with the first index, and the first index indicates the first cell.

As one sub-embodiment of the above embodiment, the first index indicates the first cell among at least one candidate cell.

As one sub-embodiment of the above embodiment, the first index is used for indicating the first cell in an LTM command.

As one sub-embodiment of the above embodiment, the first index is used for indicating the first cell in a PDCCH (Physical Downlink Control Channel) order.

As one sub-embodiment of the above embodiment, the first index is one logical identifier.

As one sub-embodiment of the above embodiment, the first signaling is one LTM command.

As one sub-embodiment of the above embodiment, the first signaling is one MAC CE.

As one sub-embodiment of the above embodiment, the first signaling is one piece of DCI.

As one sub-embodiment of the above embodiment, the first signaling indicates one index of the first cell.

As one sub-embodiment of the above embodiment, the first signaling comprises one field, and the one field indicates one index other than the first index of the first cell.

As one sub-embodiment of the above embodiment, the first signaling comprises one field, and the one field indicates the first index of the first cell.

As one sub-embodiment of the above embodiment, the first signaling indicates beam information.

As one sub-embodiment of the above embodiment, the first signaling comprises one field, and the one field indicates an index of one RS resource of the first cell or one TCI state of the first cell.

As one sub-embodiment of the above embodiment, the first signaling comprises one field, and the one field indicates one TCI state of the first cell.

As one sub-embodiment of the above embodiment, the first signaling indicates a timing advance.

As one sub-embodiment of the above embodiment, the first signaling indicates whether the first signaling comprises the timing advance.

As one sub-embodiment of the above embodiment, the first signaling comprises one Timing Advance field.

As one sub-embodiment of the above embodiment, the one Timing Advance field indicates a timing advance value.

As one sub-embodiment of the above embodiment, the one Timing Advance field does not indicate the timing advance value.

As one embodiment, a dotted block F5.5 exists.

As one sub-embodiment of the above embodiment, the phrase "along with the action of applying the configuration information of the first cell" means: when the configuration information of the first cell is applied.

As one sub-embodiment of the above embodiment, the phrase "along with the action of applying the configuration information of the first cell" means: in the process in which the configuration information of the first cell is applied.

As one sub-embodiment of the above embodiment, the phrase "along with the action of applying the configuration information of the first cell" means: immediately after given configuration information in the configuration information of the first cell is applied.

As one sub-embodiment of the above embodiment, the third message occupies an uplink resource of the first cell.

As one sub-embodiment of the above embodiment, the uplink resource of the first cell occupied by the third message is preconfigured.

As one sub-embodiment of the above embodiment, the uplink resource of the first cell occupied by the third message is contention-based.

As one sub-embodiment of the above embodiment, the uplink resource of the first cell occupied by the third message is contention-free.

As one sub-embodiment of the above embodiment, the uplink resource of the first cell occupied by the third message is a PRACH resource.

As one sub-embodiment of the above embodiment, the uplink resource of the first cell occupied by the third message is a PUSCH resource.

As one sub-embodiment of the above embodiment, the uplink resource of the first cell occupied by the third message is a PUCCH resource.

As one sub-embodiment of the above embodiment, the third message is one piece of PRACH (Physical Random Access Channel) transmission.

As one sub-embodiment of the above embodiment, the third message is one piece of PUCCH (Physical Uplink Control Channel) transmission.

As one sub-embodiment of the above embodiment, the third message is one piece of UCI (Uplink Control Information).

As one sub-embodiment of the above embodiment, the third message is one SR (Scheduling Request).

As one sub-embodiment of the above embodiment, the third message is one piece of PUSCH (Physical Uplink Shared Channel) transmission.

As one sub-embodiment of the above embodiment, the third message is one MAC CE (Control Element).

As one sub-embodiment of the above embodiment, the third message is one MAC Subheader.

As one sub-embodiment of the above embodiment, the third message is one MAC SDU (Service Data Unit).

As one sub-embodiment of the above embodiment, the third message is one RRC message.

As one sub-embodiment of the above embodiment, the third message is one RRCReconfigurationComplete message.

As one sub-embodiment of the above embodiment, the third message is one RRCConnectionReconfigurationComplete message.

As one embodiment, the dotted block F5.5 does not exist.

As one sub-embodiment of the above embodiment, uplink sending is executed on the first cell only when uplink scheduling is received on the first cell.

As one sub-embodiment of the above embodiment, the uplink sending is not executed on the first cell before the uplink scheduling is received on the first cell.

As one sub-embodiment of the above embodiment, the above method reduces signaling overhead.

As one sub-embodiment of the above embodiment, the above method reduces UE power consumption.

As one sub-embodiment of the above embodiment, the above method is particularly applicable when the first cell is in a network energy saving state.

As one sub-embodiment of the above embodiment, the above method is particularly applicable when the first cell is in a dormant state.

### Embodiment 6

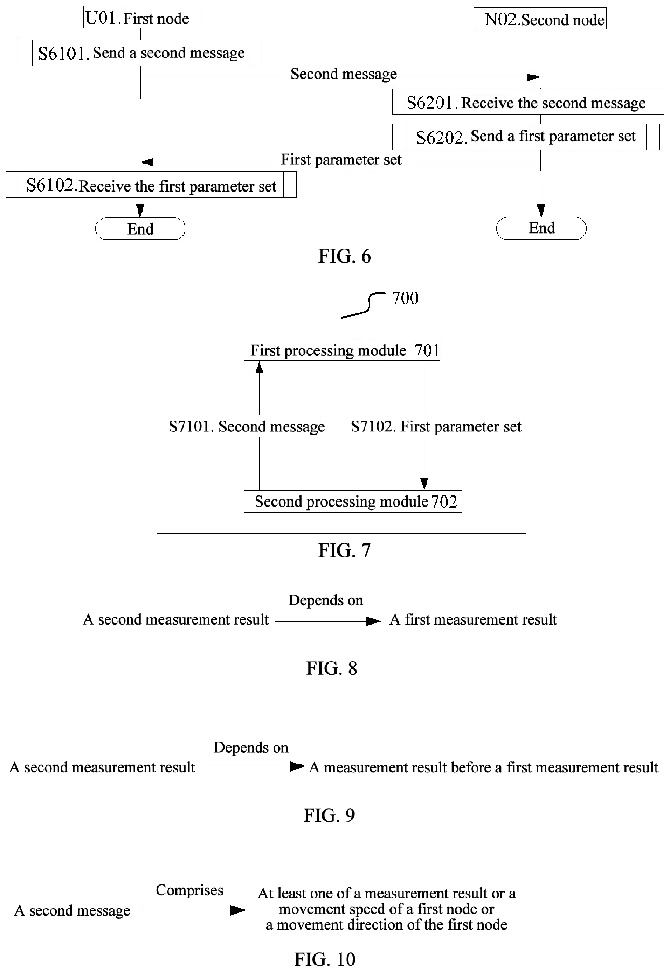

Embodiment 6 illustrates a flowchart of wireless signal transmission according to another embodiment of the present application, as shown in FIG. 6. It is particularly noted that the order in this example does not limit the signal transmission order and implementation order in the present application.

For **a first node U01,** in step S6101, a second message is sent; and in step S6102, a first parameter set is received, wherein a second measurement result depends on the first parameter set.

For **a second node N02,** in step S6201, the second message is received; and in step S6202, the first parameter set is sent.

In Embodiment 6, the first parameter set depends on the second message; and the second message is sent before the first parameter set is received.

As one embodiment, the first parameter set is one function.

As one embodiment, the first parameter set is one constant.

As one embodiment, the first parameter set is one variable.

As one embodiment, the first parameter set is one scaling factor.

As one embodiment, the first parameter set is Q1.

As one embodiment, the first parameter set comprises at least the Q1.

As one embodiment, the first parameter set does not comprise the Q1.

As one embodiment, the first parameter set comprises at least one parameter.

As one embodiment, the first parameter set comprises a plurality of parameters.

As one embodiment, the first parameter set comprises only one parameter.

As one embodiment, the first parameter set is sent by the first node U01 to the first node U01.

As one embodiment, the first parameter set is sent by the second node N02 to the first node U01.

As one embodiment, the first parameter set is a first-type output of a third module.

As one embodiment, the first parameter set comprises only one parameter.

As one embodiment, the first parameter set comprises a plurality of parameters.

As one embodiment, the phrase "a second measurement result depends on the first parameter set" means that: the second measurement result is related to the first parameter set.

As one embodiment, the phrase "a second measurement result depends on the first parameter set" means that: the second measurement result depends on each parameter in the first parameter set.

As one embodiment, the phrase "a second measurement result depends on the first parameter set" means that: the second measurement result is linearly related to the first parameter set.

As one embodiment, the second measurement result depends on a first measurement result and the first parameter set.

As one embodiment, the second measurement result is linearly related to the first measurement result and the first parameter set.

As one embodiment, the second measurement result depends on the first measurement result, a measurement result before the first measurement result, and the first parameter set.

As one embodiment, the second measurement result is linearly related to the first measurement result, the measurement result before the first measurement result, and the first parameter set.

As one embodiment, the second message is sent in an RRC_CONNECTED state.

As one embodiment, the second message is sent in an RRC_INAVTIVE state.

As one embodiment, the second message is sent in an RRC_IDLE state.

As one embodiment, the second message is sent by the first node U01 to the first node U01.

As one embodiment, the second message is sent by the first node U01 to the second node N02.

As one embodiment, the second message is a first data set sent by a first module to a second module.

As one embodiment, the second message is a second data set sent by the first module to the second module.

As one embodiment, before the first parameter set is received, only the second message is sent.

As one embodiment, before the first parameter set is received, a plurality of messages are sent, and the second message is one of the plurality of messages.

As one embodiment, the phrase "the first parameter set depends on the second message" means that: the second message triggers the first parameter set.

As one embodiment, the phrase "the first parameter set depends on the second message" means that: the second message assists sending of the first parameter set.

As one embodiment, the phrase "the first parameter set depends on the second message" means that: the second message assists generation of the first parameter set.

As one embodiment, the phrase "the first parameter set depends on the second message" means that: the second message is used for determining the first parameter set.

As one embodiment, the phrase "the first parameter set depends on the second message" means that: the second message is used for generating the first parameter set.

As one embodiment, the phrase "the first parameter set depends on the second message" means that: any parameter in the first parameter set depends on the second message.

### Embodiment 7

Embodiment 7 illustrates a flowchart of wireless signal transmission according to still another embodiment of the present application, as shown in FIG. 7. It is particularly noted that the order in this example does not limit the signal transmission order and implementation order in the present application.

For **a first processor 700,** in step S7101, a second processing module 702 sends a second message, and a first processing module 701 receives the second message; and in step S7102, the first processing module 701 sends a first parameter set, the second processing module 702 receives the first parameter set, and a second measurement result depends on the first parameter set.

In Embodiment 7, before the first parameter set is received, the second message is sent; and the first parameter set depends on the second message.

As one embodiment, the first processor comprises the second processing module 702 and the first processing module 701.

As one embodiment, the second processing module 702 and the first processing module 701 belong to the same protocol layer.

As one embodiment, the second processing module 702 and the first processing module 701 belong to different protocol layers.

As one embodiment, the second processing module 702 and the first processing module 701 belong to one artificial intelligence processing system.

As one embodiment, the artificial intelligence processing system has an artificial intelligence processing function.

As one embodiment, the artificial intelligence processing system means the artificial intelligence processing function.

As one embodiment, the artificial intelligence processing means AI/ML.

As one embodiment, the artificial intelligence processing comprises AI.

As one embodiment, the artificial intelligence processing comprises ML.

As one embodiment, the first parameter set refers to Embodiment 6.

As one embodiment, the phrase "a second measurement result depends on the first parameter set" refers to Embodiment 6.

As one embodiment, the meaning of the phrase "the first parameter set depends on the second message" refers to Embodiment 6.

### Embodiment 8

Embodiment 8 illustrates a schematic diagram of a second measurement result depending on a first measurement result according to one embodiment of the present application.

In one embodiment 8, the second measurement result depends on the first measurement result.

As one embodiment, the first measurement result is **Mₙ**, and the **Mₙ** refers to Section 5.5.3.2 of 3GPP TS38.331.

As one embodiment, the first measurement result is **Fₙ**, and the **Fₙ** refers to Section 5.5.3.2 of 3GPP TS38.331.

As one embodiment, the second measurement result is **Mₙ₊₁**.

As one embodiment, the second measurement result is **Fₙ₊₁**.

As one embodiment, the phrase "the second measurement result depends on the first measurement result" means that: the second measurement result is related to the first measurement result.

As one embodiment, the phrase "the second measurement result depends on the first measurement result" means that: the second measurement result is linearly related to the first measurement result.

As one embodiment, the phrase "the second measurement result depends on the first measurement result" means that: the second measurement result is nonlinearly related to the first measurement result.

As one embodiment, the phrase "the second measurement result depends on the first measurement result" means that: calculation of the second measurement result is related to the first measurement result.

As one embodiment, the phrase "the second measurement result depends on the first measurement result" means that: determination of the second measurement result and the first measurement result.

As one embodiment, the second measurement result is related to the first measurement result and Q1.

As one embodiment, the second measurement result is Q1 times the first measurement result; and the Q1 is not less than 0.

As one embodiment, the second measurement result is (1 - Q1) times the first measurement result.

As one embodiment, the Q1 is not less than 0.

As one embodiment, the Q1 is not less than 0, and the Q1 is greater than 1.

As one embodiment, the Q1 is not less than 0, and the Q1 is not greater than 1.

As one embodiment, the Q1 is greater than 0, and the Q1 is not greater than 1.

As one embodiment, the Q1 is one constant.

As one embodiment, the Q1 is one variable.

As one embodiment, the Q1 is one filter coefficient.

As one embodiment, the Q1 is related to one filter coefficient.

As one embodiment, a first node receives the Q1; and a second node sends the Q1.

As one embodiment, the first node receives one parameter; the second node sends the one parameter; and the one parameter is used for determining the Q1.

As one embodiment, the first node determines the Q1.

As one embodiment, the first measurement result is an input of an artificial intelligence processing system, and the second measurement result is an output of the artificial intelligence processing system.

As one embodiment, the first measurement result is the input of the artificial intelligence processing system, and the Q1 is an output of the artificial intelligence processing system.

As one embodiment, the Q1 is **a** in the formula **Fₙ** = (1 **- a)** * **Fₙ₋₁** + **a** * **Mₙ** of Section 5.5.3.2 of 3GPP TS38.331.

As one embodiment, the Q1 is not the **a** in the formula **Fₙ** = (1 **- a)** * **Fₙ₋₁** + **a** * **Mₙ** of Section 5.5.3.2 of 3GPP TS38.331.

### Embodiment 9

Embodiment 9 illustrates a schematic diagram of a second measurement result depending on a measurement result before a first measurement result according to one embodiment of the present application, as shown in FIG. 9.

In one embodiment 9, the second measurement result depends on the measurement result before the first measurement result.

As one embodiment, the measurement result before the first measurement result is **M₁** ... **Mₙ₋₁**, and the **M₁** ... **Mₙ₋₁** refers to Section 5.5.3.2 of 3GPP TS38.331.

As one embodiment, the measurement result before the first measurement result is **F₁** ... **Fₙ₋₁**, and the **F₁** ... **Fₙ₋₁** refers to Section 5.5.3.2 of 3GPP TS38.331.

As one embodiment, the measurement result before the first measurement result is **Fₙ₋₁**, and the **Fₙ₋₁** refers to Section 5.5.3.2 of 3GPP TS38.331.

As one embodiment, the measurement result before the first measurement result is **Mₙ₋₁**, and the **Mₙ₋₁** refers to Section 5.5.3.2 of 3GPP TS38.331.

As one embodiment, the second measurement result is **Mₙ₊₁**.

As one embodiment, the second measurement result is **Fₙ₊₁**.

As one embodiment, the measurement result before the first measurement result is at least one measurement result before the first measurement result.

As one embodiment, the measurement result before the first measurement result is one measurement result before the first measurement result.

As one embodiment, the measurement result before the first measurement result is a plurality of measurement results before the first measurement result.

As one embodiment, the measurement result before the first measurement result is at most n-1 measurement results before the first measurement result.

As one embodiment, the phrase "the second measurement result depends on the measurement result before the first measurement result" means that: the second measurement result is related to the measurement result before the first measurement result.

As one embodiment, the phrase "the second measurement result depends on the measurement result before the first measurement result" means that: the second measurement result is linearly related to the measurement result before the first measurement result.

As one embodiment, the phrase "the second measurement result depends on the measurement result before the first measurement result" means that: the second measurement result is nonlinearly related to the measurement result before the first measurement result.

As one embodiment, the phrase "the second measurement result depends on the measurement result before the first measurement result" means that: calculation of the second measurement result is related to the measurement result before the first measurement result.

As one embodiment, the phrase "the second measurement result depends on the measurement result before the first measurement result" means that: determination of the second measurement result is related to the measurement result before the first measurement result.

As one embodiment, the second measurement result is related to the measurement result before the first measurement result and Q1.

As one embodiment, the second measurement result is Q1 times the measurement result before the first measurement result; and the Q1 is not less than 0.

As one embodiment, the second measurement result is (1 - Q1) times the measurement result before the first measurement result; and the Q1 is not less than 0, and the Q1 is not greater than 1.

As one embodiment, the second measurement result does not depend on the first measurement result.

As one embodiment, the second measurement result depends on the first measurement result, and the second measurement result is related to the measurement result before the first measurement result and the Q1.

As one embodiment, the second measurement result is related to the first measurement result, the measurement result before the first measurement result, and the Q1.

As one embodiment, the second measurement result is Q1 times the sum of the first measurement result and the measurement result before the first measurement result; and the Q1 is not less than 0.

As one embodiment, the second measurement result is (1 - Q1) times the sum of the first measurement result and the measurement result before the first measurement result; and the Q1 is not less than 0, and the Q1 is not greater than 1.

As one embodiment, the second measurement result is the sum of Q1 times the first measurement result and (1 - Q1) times the measurement result before the first measurement result.

As one embodiment, the Q1 is not less than 0.

As one embodiment, the Q1 is not less than 0, and the Q1 is greater than 1.

As one embodiment, the Q1 is not less than 0, and the Q1 is not greater than 1.

As one embodiment, the Q1 is greater than 0, and the Q1 is not greater than 1.

As one embodiment, the Q1 is one constant.

As one embodiment, the Q1 is one variable.

As one embodiment, the Q1 is one filter coefficient.

As one embodiment, the Q1 is related to one filter coefficient.

As one embodiment, a first node receives the Q1; and a second node sends the Q1.

As one embodiment, the first node receives one parameter; the second node sends the one parameter; and the one parameter is used for determining the Q1.

As one embodiment, the first node determines the Q1.

As one embodiment, the measurement result before the first measurement result is an input of an artificial intelligence processing system, and the second measurement result is an output of the artificial intelligence processing system.

As one embodiment, the measurement result before the first measurement result is the input of the artificial intelligence processing system, and the Q1 is an output of the artificial intelligence processing system.

As one embodiment, the first measurement result and the measurement result before the first measurement result are inputs of the artificial intelligence processing system, and the second measurement result is an output of the artificial intelligence processing system.

As one embodiment, the first measurement result and the measurement result before the first measurement result are inputs of the artificial intelligence processing system, and the Q1 is an output of the artificial intelligence processing system.

As one embodiment, the Q1 is a in the formula **Fₙ = (1 - a) * Fₙ₋₁ + a * Mₙ** of Section 5.5.3.2 of 3GPP TS38.331.

As one embodiment, the Q1 is not the a in the formula **Fₙ = (1 - a) * Fₙ₋₁ + a * Mₙ** of Section 5.5.3.2 of 3GPP TS38.331.

### Embodiment 10

Embodiment 10 illustrates a schematic diagram of a second message according to one embodiment of the present application, as shown in FIG. 10.

In Embodiment 10, before the action of receiving a first parameter set, the second message is sent; the first parameter set depends on the second message; and the second message comprises at least one of a measurement result or a movement speed of a first node or a movement direction of the first node.

As one embodiment, the measurement result comprised in the second message comprises an L1 measurement result.

As one embodiment, the measurement result comprised in the second message comprises an L3 measurement result.

As one embodiment, the measurement result comprised in the second message comprises position information of the first node.

As one embodiment, the second message indicates an index of a region to which a position of the first node belongs.

As one embodiment, the second message indicates coordinates of a position of the first node.

As one embodiment, the second message indicates longitude and latitude where a position of the first node is located.

As one embodiment, the measurement result comprised in the second message comprises a measurement result of at least one cell.

As one embodiment, the measurement result comprised in the second message comprises a measurement result of a second cell.

As one embodiment, the measurement result comprised in the second message comprises a measurement result of a first cell.

As one embodiment, the second message explicitly indicates the movement speed of the first node.

As one embodiment, the second message implicitly indicates the movement speed of the first node.

As one embodiment, the second message comprises a first index, and the first index indicates the movement speed of the first node.

As one embodiment, the first index indicates one movement state, and the one movement state indicates the movement speed of the first node.

As one embodiment, the first index is one index in a first table; and the first table comprises a plurality of indexes, and each index of the plurality of indexes indicates a range of one speed.

The above method indicates the movement speed of the first node through table lookup, saving signaling overhead.

The above method indicates the movement speed of the first node through table lookup, which is beneficial to UE implementations.

As one embodiment, the first table is predefined.

As one embodiment, the first table is RRC-configured.

As one embodiment, a range of a speed indicated by each index in the first table depends on an RRC configuration.

As one embodiment, a first angle indicates the movement direction of the first node.

As one embodiment, the second message explicitly indicates the movement direction of the first node.

As one embodiment, the second message implicitly indicates the movement direction of the first node.

As one embodiment, the second message comprises the first angle; and the first angle indicates the movement direction of the first node.

As one embodiment, the second message comprises the first angle and a first indicator; and the first angle and the first indicator indicate the movement direction of the first node.

As one embodiment, the first angle indicates an angle between the movement direction of the first node and a first reference line.

As one embodiment, a direction of the first reference line is indicated.

As one embodiment, the direction of the first reference line is default.

As one embodiment, the direction of the first reference line is predefined.

As one embodiment, the first reference line is one ray.

As one embodiment, the first reference line is one straight line.

As one embodiment, a starting point of the first reference line is a position of the first node.

As one embodiment, the first reference line is a longitude line where a position of the first node is located.

As one embodiment, the first reference line is a latitude line where a position of the first node is located.

As one embodiment, the first reference line is on the longitude line where the position of the first node is located.

As one embodiment, the first reference line is on the latitude line where the position of the first node is located.

As one embodiment, the first angle is a clockwise angle.

As one embodiment, the first angle is a counterclockwise angle.

As one embodiment, a position of the first angle relative to the first reference line is indicated.

As one embodiment, the position of the first angle relative to the first reference line is default.

As one embodiment, the position of the first angle relative to the first reference line is predefined.

As one embodiment, the first angle is not less than 0 degrees and not greater than 360 degrees.

As one embodiment, the first angle is not less than -180 degrees and not greater than 180 degrees.

As one embodiment, the first angle is not less than 0 degrees and not greater than 90 degrees.

As one embodiment, the first angle is not less than -90 degrees and not greater than 90 degrees.

As one embodiment, the first angle is the angle between the movement direction of the first node and the first reference line, and the first indicator indicates a relative position of the movement direction of the first node to the first reference line.

As one embodiment, the first indicator indicates whether the first angle is the clockwise angle or the counterclockwise angle.

As one embodiment, the first indicator is one bit.

As one embodiment, the first indicator being a first value indicates that the first angle is the clockwise angle; and the first indicator being a second value indicates that the first angle is the counterclockwise angle.

As one embodiment, the first indicator being the first value indicates that the movement direction of the first node is in a counterclockwise direction of the first reference line; and the first indicator being the second value indicates that the movement direction of the first node is in a clockwise direction of the first reference line.

As one embodiment, the first indicator being the first value indicates that the movement direction of the first node is at a counterclockwise angle of the first reference line; and the first indicator being the second value indicates that the movement direction of the first node is at a clockwise angle of the first reference line.

As one embodiment, the first indicator being the first value indicates that the direction of the first reference line is eastward; and the first indicator being the second value indicates that the direction of the first reference line is westward.

As one embodiment, the first indicator being the first value indicates that the direction of the first reference line is westward; and the first indicator being the second value indicates that the direction of the first reference line is eastward.

As one embodiment, the first indicator being the first value indicates that the direction of the first reference line is northward; and the first indicator being the second value indicates that the direction of the first reference line is southward.

As one embodiment, the first indicator being the first value indicates that the direction of the first reference line is southward; and the first indicator being the second value indicates that the direction of the first reference line is northward.

As one sub-embodiment of the above embodiment, the first angle being less than 0 indicates north by west an absolute value of the first angle; the first angle being greater than 0 indicates north by east the first angle; and the first indicator is the first value.

As one sub-embodiment of the above embodiment, the first angle being less than 0 indicates south by west the absolute value of the first angle; the first angle being greater than 0 indicates south by east the first angle; and the first indicator is the first value.

As one sub-embodiment of the above embodiment, the first angle being less than 0 indicates north by east the absolute value of the first angle; the first angle being greater than 0 indicates north by west the first angle; and the first indicator is the first value.

As one sub-embodiment of the above embodiment, the first angle being less than 0 indicates south by east the absolute value of the first angle; the first angle being greater than 0 indicates south by west the first angle; and the first indicator is the first value.

As one embodiment, the first value and the second value are one of 1 and 0 respectively.

As one embodiment, the first value and the second value are one of north and south respectively.

As one embodiment, the first value and the second value are one of east and west respectively.

As one embodiment, the first value and the second value are one of right and left respectively.

As one embodiment, the first value is one character string, and the second value is one character string.

As one embodiment, the first indicator occupies 1 bit.

As one embodiment, the first indicator occupies a plurality of bits.

As one embodiment, the first indicator indicates the direction of the first reference line, and a second indicator indicates whether the first angle is the clockwise angle or the counterclockwise angle.

As one sub-embodiment of the above embodiment, the first indicator being the first value indicates that the direction of the first reference line is northward, and the first indicator being the second value indicates that the direction of the first reference line is southward; and the second indicator being a third value indicates that the first angle is the clockwise angle, and the second indicator being a fourth value indicates that the first angle is the clockwise angle.

As one sub-embodiment of the above embodiment, the first indicator being the first value indicates that the direction of the first reference line is westward, and the first indicator being the second value indicates that the direction of the first reference line is eastward; and the second indicator being the third value indicates that the first angle is the clockwise angle, and the second indicator being the fourth value indicates that the first angle is the clockwise angle.

As one sub-embodiment of the above embodiment, the first indicator and the second indicator occupy one bit respectively.

As one sub-embodiment of the above embodiment, the first indicator and the second indicator are two consecutive bits.

As one sub-embodiment of the above embodiment, the first indicator and the second indicator are jointly encoded.

As one sub-embodiment of the above embodiment, the first indicator and the second indicator are independently encoded.

As one sub-embodiment of the above embodiment, the first value and the second value are different.

As one sub-embodiment of the above embodiment, the first value and the second value are one of 1 and 0 respectively.

As one sub-embodiment of the above embodiment, the first value and the second value are one of north and south respectively.

As one sub-embodiment of the above embodiment, the first value and the second value are one of east and west respectively.

As one sub-embodiment of the above embodiment, the third value and the fourth value are one of 1 and 0 respectively.

### Embodiment 11

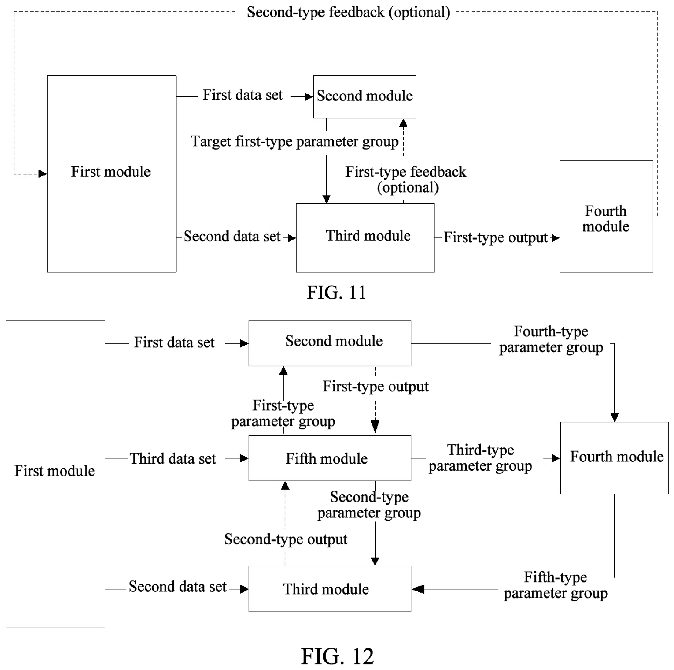

Embodiment 11 illustrates a schematic diagram of an artificial intelligence processing system according to one embodiment of the present application, as shown in FIG. 11. FIG. 11 comprises a first module, a second module, a third module, and a fourth module.

In Embodiment 11, the first module sends a first data set to the second module, the second module generates a target first-type parameter group according to the first data set, the second module sends the generated target first-type parameter group to the third module, and the third module processes a second data set using the target first-type parameter group to obtain a first-type output and then sends the first-type output to the fourth module.

As one embodiment, the first module, the second module, the third module, and the fourth module all belong to a first node.

The above method avoids air interface signaling interaction and shortens transmission delay.

As one embodiment, any one of the first module, the second module, the third module, and the fourth module does not belong to the first node.

The above method reduces hardware complexity of the first node.

As one embodiment, at least the first module in the first module, the second module, the third module and the fourth module belongs to the first node; and at least one of the first module, the second module, the third module, and the fourth module does not belong to the first node.

The above method balances the hardware complexity and the transmission delay of the first node.

As one embodiment, the first module is used for data collection.

As one embodiment, at least one of the first data set or the second data set comprises a second message.

As one embodiment, at least one of the first data set or the second data set comprises a movement direction of the first node.

As one embodiment, at least one of the first data set or the second data set comprises a movement speed of the first node.

As one embodiment, at least one of the first data set or the second data set comprises a first measurement result.

As one embodiment, at least one of the first data set or the second data set comprises the first measurement result and a measurement result before the first measurement result.

As one embodiment, at least one of the first data set or the second data set comprises a measurement result of at least one cell.

As one embodiment, the second module is used for model training.

As one embodiment, the first data set is training data, the second data set is inference data, the second module is used for training a model, and the trained model is described by the target first-type parameter group.

As one embodiment, the third module is used for model inference.

As one embodiment, the third module constructs a model according to the target first-type parameter group, then inputs the second data set into the constructed model to obtain the first-type output, and then sends the first-type output to the fourth module.

As one embodiment, the third module calculates an error between the first-type output and actual data to determine performance of the trained model; and the actual data is data that is received after the second data set and that is transferred from the first module.

The above embodiments are particularly suitable for prediction-related cell mobility.

As one embodiment, the third module sends first-type feedback to the second module, and the first-type feedback is used for triggering recalculation or update of the target first-type parameter group.

As one embodiment, the third module recovers a reference data set according to the first-type output, and an error between the reference data set and the second data set is used for generating the first-type feedback.

As one embodiment, the first-type feedback is used for reflecting performance of the trained model; and when the performance of the trained model cannot meet requirements, the second module recalculates the target first-type parameter group.

Typically, when the error is too large or has not been updated for too long, the performance of the trained model is considered to be unable to meet the requirements.

As one embodiment, the fourth module is one Actor.

As one embodiment, the fourth module receives the first-type output from the third module.

As one embodiment, the fourth module executes corresponding actions according to the first-type output.

As one embodiment, the fourth module sends second-type feedback to the first module, the second-type feedback is used for generating the first data set or the second data set, or the second-type feedback is used for triggering sending of the first data set or the second data set.

As one embodiment, the fourth module sends the second-type feedback to the first module, and the second-type feedback is used for triggering execution of the first-type output.

As one embodiment, the action of executing the first-type output comprises the action "in response to a first condition set being satisfied, executing a measurement on a first frequency".

As one embodiment, the action of executing the first-type output comprises the action "in response to a second condition set being satisfied, executing a measurement on a second frequency".

As one embodiment, the first-type output comprises at least part of a first message.

As one embodiment, the first-type output comprises a second threshold.

As one embodiment, the first-type output comprises a second measurement result.

As one embodiment, the first-type output comprises a first parameter set.

As one embodiment, the phrase "the first parameter set depends on a previous measurement" means that: an input of the artificial intelligence processing system depends on the previous measurement, and the first parameter set is an output of the artificial intelligence processing system.

As one embodiment, Embodiment 11 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 11.

### Embodiment 12

Embodiment 12 illustrates a schematic diagram of an artificial intelligence processing system according to another embodiment of the present application, as shown in FIG. 12. FIG. 12 comprises a first module, a second module, a third module, a fourth module, and a fifth module.

In Embodiment 12, the first module sends a first data set to the second module, the first module sends a second data set to the third module, the first module sends a third data set to the fifth module, the fifth module sends a first-type parameter group to the second module, the fifth module sends a second-type parameter group to the third module, the fifth module sends a third-type parameter group to the fourth module, the second module sends a fourth-type parameter group to the fourth module, and the fourth module sends a fifth-type parameter group to the third module.

As one embodiment, the first module, the second module, the third module, the fourth module, and the fifth module all belong to a first node.

The above method avoids air interface signaling interaction and shortens transmission delay.

As one embodiment, any one of the first module, the second module, the third module, the fourth module, and the fifth module does not belong to the first node.

The above method reduces hardware complexity of the first node.

As one embodiment, at least the first module among the first module, the second module, the third module, the fourth module, and the fifth module belongs to the first node; and at least one of the first module, the second module, the third module, the fourth module, and the fifth module does not belong to the first node.

The above method balances hardware complexity and transmission delay of the first node.

As one embodiment, the first module is used for data collection.

As one embodiment, the first module is responsible for data collection.

As one embodiment, the first module has a data collection function.

As one embodiment, the second module is used for model training.

As one embodiment, the second module is responsible for model training.

As one embodiment, the second module has a model training function.

As one embodiment, the second module executes AI/ML model training.

As one embodiment, the second module executes validation.

As one embodiment, the second module executes testing.

As one embodiment, the second module generates model performance metrics.

As one embodiment, the second module is responsible for data preparation.

As one embodiment, the data preparation comprises at least one of data pre-processing or cleaning or formatting or transformation.

As one embodiment, the third module is used for inference.

As one embodiment, the third module has an inference function.

As one embodiment, the third module is responsible for inference.

As one embodiment, the fourth module is used for model storage.

As one embodiment, the fourth module has a model storage function.

As one embodiment, the fourth module is responsible for storing a trained model.

As one embodiment, the fourth module is responsible for storing a trained model that can be used for executing inference processing.

As one embodiment, the fifth module is used for management.

As one embodiment, the fifth module is responsible for management.

As one embodiment, the fifth module has a management function.

As one embodiment, the first data set is training data.

As one embodiment, the second data set is inference data.

As one embodiment, the third data set is monitoring data.

As one embodiment, the first-type parameter group comprises a monitoring output.

As one embodiment, the second-type parameter group comprises a management instruction.

As one embodiment, the second-type parameter group is used for a fine-tune operation of an inference function.

As one embodiment, the second-type parameter group comprises an identifier of a model.

As one embodiment, the second-type parameter group is used for selecting a model.

As one embodiment, the second-type parameter group is used for switching a model.

As one embodiment, the second-type parameter group is used for activating/deactivating a model.

As one embodiment, the second-type parameter group is used for falling back from an AI-ML operation to a non-AI-ML operation.

As one embodiment, the third-type parameter group comprises a model transfer request.

As one embodiment, the third-type parameter group comprises a model delivery request.

As one embodiment, the fourth-type parameter group comprises a trained model.

As one embodiment, the fourth-type parameter group comprises an updated model.

As one embodiment, the fourth-type parameter group indicates the identifier of the model.

As one embodiment, the fifth-type parameter group comprises model transfer.

As one embodiment, the fifth-type parameter group comprises model delivery.

As one embodiment, the fifth-type parameter group indicates the identifier of the model.

As one embodiment, a first-type output comprises a monitoring output.

As one embodiment, the first-type output exists.

As one embodiment, the first-type output does not exist.

As one embodiment, a second-type output comprises an inference output.

As one embodiment, the second-type output is used by the fifth module for monitoring performance of an AI/ML model.

As one embodiment, the second-type output is used by the fifth module for monitoring performance of an AI/ML function.

As one embodiment, the second-type output exists.

As one embodiment, the second-type output does not exist.

As one embodiment, the artificial intelligence processing system generates or assists in generating at least part of a first message.

As one embodiment, the fifth module generates or assists in generating at least part of the first message.

As one embodiment, the third module generates or assists in generating at least part of the first message.

As one embodiment, the second-type output comprises at least part of the first message.

As one embodiment, the artificial intelligence processing system generates or assists in generating a second threshold.

As one embodiment, the fifth module generates or assists in generating the second threshold.

As one embodiment, the third module generates or assists in generating the second threshold.

As one embodiment, the second-type output comprises the second threshold.

As one embodiment, the artificial intelligence processing system generates or assists in generating a second measurement result.

As one embodiment, the fifth module generates or assists in generating the second measurement result.

As one embodiment, the third module generates or assists in generating the second measurement result.

As one embodiment, the second-type output comprises the second measurement result.

As one embodiment, the artificial intelligence processing system generates or assists in generating a first parameter set.

As one embodiment, the fifth module generates or assists in generating the first parameter set.

As one embodiment, the third module generates or assists in generating the first parameter set.

As one embodiment, the second-type output comprises the first parameter set.

As one embodiment, the first data set comprises a second message.

As one embodiment, the second data set comprises the second message.

As one embodiment, the third data set comprises the second message.

As one embodiment, the first module comprises a first processing module 702 in FIG. 7, and the second module comprises a second processing module 701 in FIG. 7.

As one embodiment, the first module comprises the first processing module 702 in FIG. 7, and the third module comprises the second processing module 701 in FIG. 7.

As one embodiment, the first module comprises the first processing module 702 in FIG. 7, and the fifth module comprises the second processing module 701 in FIG. 7.

As one embodiment, Embodiment 12 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 12.

### Embodiment 13

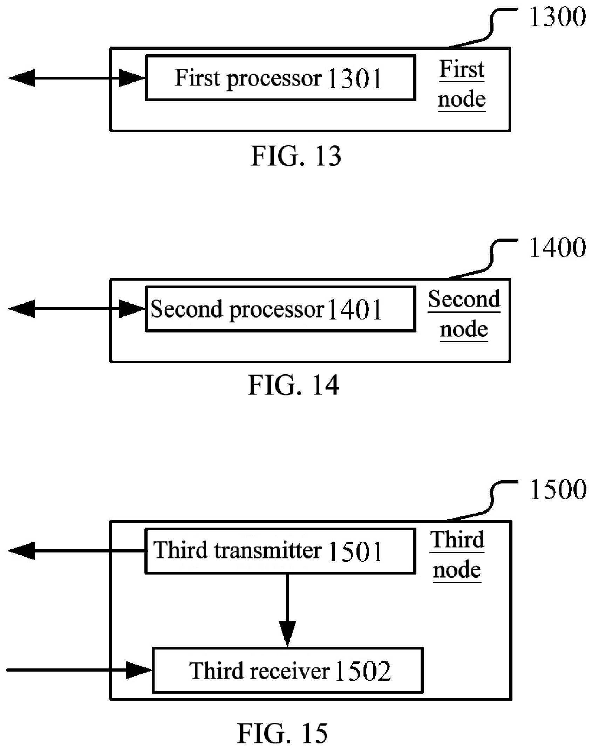

Embodiment 13 illustrates a structural block diagram of a processing apparatus used in a first node according to one embodiment of the present application, as shown in FIG. 13. In FIG. 13, a processing apparatus 1300 in the first node comprises a first processor 1301.

The first processor 1301 receives a first message, wherein the first message comprises configuration information of a first cell, and the first message is signaling of an RRC sublayer; when a first condition set is satisfied, determines the first cell; and after the action of determining the first cell, applies the configuration information of the first cell.

In Embodiment 13, the first condition set depends on at least a first measurement result and a second measurement result; the first measurement result comprises a latest measurement result measured by a physical layer; the second measurement result comprises an expected measurement result; the second measurement result is different from the first measurement result; and before the action of applying the configuration information of the first cell, configuration information of a second cell is applied.

As one embodiment, the first processor 1301 receives a first threshold and a second threshold, wherein the first condition set depends on whether the first measurement result is better than the first threshold and whether the second measurement result is better than the second threshold.

As one embodiment, the second measurement result depends on the first measurement result.

As one embodiment, the second measurement result depends on a measurement result before the first measurement result.

As one embodiment, the first processor 1301 receives a first parameter set, and the second measurement result depends on the first parameter set.

As one embodiment, the first processor 1301 sends a second message before the action of receiving the first parameter set, wherein the first parameter set depends on the second message.

As one embodiment, the second message comprises at least one of a measurement result, a movement speed of the first node, or a movement direction of the first node.

As one embodiment, the first processor 1301 sends a first measurement report in response to the action of determining the first cell, and the first measurement report comprises the first measurement result and the second measurement result, wherein the action of sending the first measurement report is earlier than the action of receiving the first message; and the first message triggers the action of applying the configuration information of the first cell.

As one embodiment, the first processor 1301 sends the first measurement report in response to the action of determining the first cell; and after the action of sending the first measurement report, receiving first signaling, wherein the first signaling indicates the first cell, wherein the action of receiving the first message is earlier than the action of sending the first measurement report; the first signaling triggers the action of applying the configuration information of the first cell; and the first signaling is signaling of a protocol layer below the RRC sublayer.

As one embodiment, the first processor 1301 sends a third message on the first cell along with the action of applying the configuration information of the first cell, wherein the third message indicates the first cell.

As one embodiment, the first processor 1301 comprises a first receiver.

As one embodiment, the first processor 1301 comprises a first transmitter.

As one embodiment, the first processor 1301 comprises the first receiver and the first transmitter.

As one embodiment, the first receiver comprises at least one of an antenna 452 or a receiving device 454 or a multi-antenna receiving processor 458 or a receiving processor 456 or a controller/processor 459 or a memory 460 or a data source 467 in FIG. 4 of the present application.

As one embodiment, the first receiver comprises at least the antenna 452 and the receiving device 454 in FIG. 4 of the present application.

As one embodiment, the first transmitter comprises at least one of the antenna 452 or a transmitting device 454 or a multi-antenna transmitting processor 457 or a transmitting processor 468 or the controller/processor 459 or the memory 460 or the data source 467 in FIG. 4 of the present application.

As one embodiment, the first transmitter comprises at least the antenna 452 and the transmitting device 454 in FIG. 4 of the present application.

### Embodiment 14

Embodiment 14 illustrates a structural block diagram of a processing apparatus used in a second node according to one embodiment of the present application, as shown in FIG. 14. In FIG. 14, a processing apparatus 1400 in the second node comprises a second processor 1401.

The second processor 1401 sends a first message, the first message comprises configuration information of a first cell, and the first message is signaling of an RRC sublayer;

In Embodiment 14, when a first condition set is satisfied, a recipient of the first message determines the first cell; after the recipient of the first message determines the first cell, the recipient of the first message applies the configuration information of the first cell; the first condition set depends on at least a first measurement result and a second measurement result; the first measurement result comprises a latest measurement result measured by a physical layer; the second measurement result comprises an expected measurement result; the second measurement result is different from the first measurement result; and before the recipient of the first message applies the configuration information of the first cell, configuration information of a second cell is applied by the recipient of the first message.

As one embodiment, the second processor 1401 sends a first threshold and a second threshold, wherein the first condition set depends on whether the first measurement result is better than the first threshold and whether the second measurement result is better than the second threshold.

As one embodiment, the second measurement result depends on the first measurement result.

As one embodiment, the second measurement result depends on a measurement result before the first measurement result.

As one embodiment, the second processor 1401 sends a first parameter set, and the second measurement result depends on the first parameter set.

As one embodiment, the second processor 1401 receives a second message before the action of sending the first parameter set, wherein the first parameter set depends on the second message.

As one embodiment, the second message comprises at least one of a measurement result, a movement speed of the recipient of the first message, or a movement direction of the recipient of the first message.

As one embodiment, the second processor 1401 receives a first measurement report, and the first measurement report comprises the first measurement result and the second measurement result, wherein in response to the recipient of the first message determining the first cell, the recipient of the first message sends the first measurement report; the recipient of the first message sending the first measurement report is earlier than the recipient of the first message receiving the first message; and the first message triggers the recipient of the first message to apply the configuration information of the first cell.

As one embodiment, the second processor 1401, receives the first measurement report; and after the action of receiving the first measurement report, sends first signaling, wherein the first signaling indicates the first cell, wherein after the recipient of the first message determines the first cell, the recipient of the first message sends the first measurement report; the recipient of the first message receiving the first message is earlier than the recipient of the first message sending the first measurement report; the first signaling triggers the recipient of the first message to apply the configuration information of the first cell; and the first signaling is signaling of a protocol layer below the RRC sublayer.

As one embodiment, the second processor 1401 receives a first RRC message, and the first RRC message comprises the first message; wherein along with the recipient of the first message applying the configuration information of the first cell, the recipient of the first message sends a third message on the first cell, and the third message indicates the first cell; and a sender of the first RRC message is a recipient of the third message.

As one embodiment, the second processor 1401 comprises a second receiver.

As one embodiment, the second processor 1401 comprises a second transmitter.

As one embodiment, the second processor 1401 comprises the second receiver and the second transmitter.

As one embodiment, the second transmitter comprises at least one of an antenna 420 or a transmitting device 418 or a multi-antenna transmitting processor 471 or a transmitting processor 416 or a controller/processor 475 or a memory 476 in FIG. 4 of the present application.

As one embodiment, the second transmitter comprises at least the antenna 420 and the transmitting device 418 in FIG. 4 of the present application.

As one embodiment, the second receiver comprises at least one of the antenna 420 or the receiving device 418 or a multi-antenna receiving processor 472 or a receiving processor 470 or the controller/processor 475 or the memory 476 in FIG. 4 of the present application.

As one embodiment, the second receiver comprises at least the antenna 420 and the receiving device 418 in FIG. 4 of the present application.

### Embodiment 15

Embodiment 15 illustrates a structural block diagram of a processing apparatus used in a third node according to one embodiment of the present application, as shown in FIG. 15. In FIG. 15, a processing apparatus 1500 in a second node comprises a third transmitter 1501 and a third receiver 1502.

The third transmitter 1501 sends a first RRC message, the first RRC message comprises a first message, the first message comprises configuration information of a first cell, and the first message is signaling of an RRC sublayer;
the third receiver 1502 receives a third message, and the third message indicates the first cell;
in Embodiment 15, a recipient of the first RRC message is a sender of the third message; the sender of the third message receives the first message; when a first condition set is satisfied, the sender of the third message determines the first cell; after the sender of the third message determines the first cell, the sender of the third message applies the configuration information of the first cell; along with the sender of the third message applying the configuration information of the first cell, the sender of the third message sends the third message on the first cell; the first condition set depends on at least a first measurement result and a second measurement result; the first measurement result comprises a latest measurement result measured by a physical layer; the second measurement result comprises an expected measurement result; the second measurement result is different from the first measurement result; and before the sender of the third message applies the configuration information of the first cell, configuration information of a second cell is applied by the sender of the third message.

As one embodiment, the sender of the third message receives a first threshold and a second threshold; the first condition set depends on whether the first measurement result is better than the first threshold and whether the second measurement result is better than the second threshold.

As one embodiment, the second measurement result depends on the first measurement result.

As one embodiment, the second measurement result depends on a measurement result before the first measurement result.

As one embodiment, the sender of the third message receives a first parameter set, and the second measurement result depends on the first parameter set.

As one embodiment, before the sender of the third message receives the first parameter set, the sender of the third message sends a second message; and the first parameter set depends on the second message.

As one embodiment, the second message comprises at least one of a measurement result, a movement speed of a first node, or a movement direction of the first node.

As one embodiment, in response to the sender of the third message determining the first cell, the sender of the third message sends a first measurement report, and the first measurement report comprises the first measurement result and the second measurement result; the sender of the third message sending the first measurement report is earlier than the sender of the third message receiving the first message; and the first message triggers the sender of the third message to apply the configuration information of the first cell.

As one embodiment, in response to the sender of the third message determining the first cell, the sender of the third message sends the first measurement report; after the sender of the third message sends the first measurement report, the sender of the third message receives first signaling, and the first signaling indicates the first cell; the sender of the third message receiving the first message is earlier than the sender of the third message sending the first measurement report; the first signaling triggers the sender of the third message to apply the configuration information of the first cell; and the first signaling is signaling of a protocol layer below the RRC sublayer.

As one embodiment, the third transmitter 1501 comprises at least one of an antenna 420 or a transmitting device 418 or a multi-antenna transmitting processor 471 or a transmitting processor 416 or a controller/processor 475 or a memory 476 in FIG. 4 of the present application.

As one embodiment, the third transmitter 1501 comprises at least the antenna 420 and the transmitting device 418 in FIG. 4 of the present application.

As one embodiment, the third receiver 1502 comprises at least one of the antenna 420 or a receiving device 418 or a multi-antenna receiving processor 472 or a receiving processor 470 or the controller/processor 475 or the memory 476 in FIG. 4 of the present application.

As one embodiment, the third receiver 1502 comprises at least the antenna 420 and the receiving device 418 in FIG. 4 of the present application.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combination. The user equipment, terminal and UE of the present application include, but are not limited to drones, communication modules on drones, remote-controlled airplanes, aircrafts, small airplanes, mobile phones, tablet computers, laptops, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system device in the present application includes but is not limited to macrocellular base stations, microcellular base stations, Femtocells, relay base stations, gNBs (NR nodes B), TRPs (Transmitter Receiver Points), and other wireless communication devices.

The above is only a preferred embodiment of the present application and is not used for limiting the scope of protection of the present application. Any modifications, equivalent replacements, improvements, etc. made within the spirit and principles of the present application should be comprised in the scope of protection of the present application.

## Claims

1. A first node for wireless communication, comprising:
a first processor receiving a first message, wherein the first message comprises configuration information of a first cell, and the first message is signaling of an RRC sublayer; when a first condition set is satisfied, determining the first cell; and after the action of determining the first cell, applying the configuration information of the first cell,
wherein the first condition set depends on at least a first measurement result and a second measurement result; the first measurement result comprises a latest measurement result measured by a physical layer; the second measurement result comprises an expected measurement result; the second measurement result is different from the first measurement result; and before the action of applying the configuration information of the first cell, configuration information of a second cell is applied.

2. The first node according to claim 1, comprising:
the first processor receiving a first threshold and a second threshold,
wherein the first condition set depends on whether the first measurement result is better than the first threshold and whether the second measurement result is better than the second threshold.

3. The first node according to claim 1 or 2, wherein the second measurement result depends on the first measurement result.

4. The first node according to any one of claims 1 to 3, wherein the second measurement result depends on a measurement result before the first measurement result.

5. The first node according to any one of claims 1 to 4, comprising:
the first processor receiving a first parameter set, wherein the second measurement result depends on the first parameter set.

6. The first node according to claim 5, comprising:
the first processor sending a second message before the action of receiving the first parameter set,
wherein the first parameter set depends on the second message.

7. The first node according to claim 6, wherein the second message comprises at least one of a measurement result, or a movement speed of the first node, or a movement direction of the first node.

8. The first node according to any one of claims 1 to 7, comprising:
the first processor sending a first measurement report in response to the action of determining the first cell, wherein the first measurement report comprises the first measurement result and the second measurement result,
wherein the action of sending the first measurement report is earlier than the action of receiving a first message; and the first message triggers the action of applying the configuration information of the first cell.

9. The first node according to any one of claims 1 to 8, comprising:
the first processor sending a third message on the first cell along with the action of applying the configuration information of the first cell,
wherein the third message indicates the first cell.

10. A method used in a first node for wireless communication, comprising:
receiving a first message, wherein the first message comprises configuration information of a first cell, and the first message is signaling of an RRC sublayer; when a first condition set is satisfied, determining the first cell; and after the action of determining the first cell, applying the configuration information of the first cell,
wherein the first condition set depends on at least a first measurement result and a second measurement result; the first measurement result comprises a latest measurement result measured by a physical layer; the second measurement result comprises an expected measurement result; the second measurement result is different from the first measurement result; and before the action of applying the configuration information of the first cell, configuration information of a second cell is applied.

11. A second node for wireless communication, comprising:
a second processor sending a first message, wherein the first message comprises configuration information of a first cell, and the first message is signaling of an RRC sublayer,
wherein when a first condition set is satisfied, a recipient of the first message determines the first cell; after the recipient of the first message determines the first cell, the recipient of the first message applies the configuration information of the first cell; the first condition set depends on at least a first measurement result and a second measurement result; the first measurement result comprises a latest measurement result measured by a physical layer; the second measurement result comprises an expected measurement result; the second measurement result is different from the first measurement result; and before the recipient of the first message applies the configuration information of the first cell, configuration information of a second cell is applied by the recipient of the first message.

12. A third node for wireless communication, comprising:
a third transmitter sending a first RRC message, wherein the first RRC message comprises a first message, the first message comprises configuration information of a first cell, and the first message is signaling of an RRC sublayer; and
a third receiver receiving a third message, wherein the third message indicates the first cell,
wherein a recipient of the first RRC message is a sender of the third message; the sender of the third message receives the first message; when a first condition set is satisfied, the sender of the third message determines the first cell; after the sender of the third message determines the first cell, the sender of the third message applies the configuration information of the first cell; along with the sender of the third message applying the configuration information of the first cell, the sender of the third message sends the third message on the first cell; the first condition set depends on at least a first measurement result and a second measurement result; the first measurement result comprises a latest measurement result measured by a physical layer; the second measurement result comprises an expected measurement result; the second measurement result is different from the first measurement result; and before the sender of the third message applies the configuration information of the first cell, configuration information of a second cell is applied by the sender of the third message.
